(19) Europäisches Patentamt / European Patent Office / Office européen des brevets

(11) **EP 4 311 306 A1**

(12) **EUROPEAN PATENT APPLICATION**
published in accordance with Art. 153(4) EPC

(43) Date of publication:
**24.01.2024 Bulletin 2024/04**

(21) Application number: **22779032.6**

(22) Date of filing: **30.03.2022**

(51) International Patent Classification (IPC):
**H04W 36/00** (2009.01)

(52) Cooperative Patent Classification (CPC):
**H04W 8/14; H04W 24/02; H04W 24/10; H04W 36/00**

(86) International application number:
**PCT/CN2022/084111**

(87) International publication number:
**WO 2022/206850 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.04.2021 CN 202110358402**

(71) Applicant: **Huawei Technologies Co., Ltd.**
**Shenzhen, Guangdong 518129 (CN)**

(72) Inventors:
• **ZENG, Yu**
**Shenzhen, Guangdong 518129 (CN)**
• **HU, Xingxing**
**Shenzhen, Guangdong 518129 (CN)**
• **GENG, Tingting**
**Shenzhen, Guangdong 518129 (CN)**
• **ZENG, Qinghai**
**Shenzhen, Guangdong 518129 (CN)**
• **LI, Lian**
**Shenzhen, Guangdong 518129 (CN)**
• **PAN, Qing**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **INFORMATION TRANSMISSION METHOD AND APPARATUS**

(57) This application provides an information transmission method and an apparatus, to help ensure continuity of performing minimization of drive test measurement by a terminal device when a cell handover occurs on the terminal device. The method includes: A core network device obtains second public land mobile network PLMN information of a second cell before a cell handover of a terminal device. After the terminal device is handed over to a first cell, the core network device obtains first PLMN information of the first cell. When a second PLMN does not belong to a PLMN list and a first PLMN belongs to the PLMN list, the core network device sends first information to a first access network device corresponding to the first cell, where the first information includes the PLMN list, and the PLMN list includes a PLMN set that allows the terminal device to perform minimization of drive test. According to the method, when the cell handover occurs on the terminal device, the first access network device existing after the handover can obtain information about the PLMN list in time, thereby ensuring continuity of performing the minimization of drive test by the terminal device.

FIG. 4

Description

**TECHNICAL FIELD**

This application relates to the field of communication technologies, and in particular, to an information transmission method and an apparatus.

**BACKGROUND**

Minimization of drive test (Minimization of Drive Test, MDT) is a technology in which an operator automatically collects terminal measurement data by measuring and reporting network coverage by a commercial terminal of a subscribed user, to detect and optimize problems and faults in a wireless network.

A core network device specifies a public land mobile network (Public Land Mobile Network, PLMN) list when a terminal device can perform the MDT, and notifies an access network device of the PLMN list. The access network device configures the MDT for the terminal device based on the PLMN list. A cell handover may occur after the terminal device successfully performs MDT measurement in a cell covered by an access network device. For example, the terminal device is handed over to a cell covered by a first access network device. If a PLMN of the cell that is covered by the first access network device and to which the terminal device is handed over is not in the PLMN list, the terminal device cannot perform MDT measurement. If the terminal device is handed over again from the cell covered by the first access network device, for example, handed over to a new target cell, even if a PLMN of the new target cell is in the PLMN list, a target access network device associated with the new target cell still cannot obtain the PLMN list, and therefore cannot notify the terminal device to perform the MDT. Therefore, when the PLMN list is lost on the target access network device side due to a cell handover of the terminal device, how to enable the target access network device to obtain the PLMN list is an urgent problem to be resolved.

**SUMMARY**

Embodiments of this application provide an information transmission method and an apparatus.

According to a first aspect, an embodiment of this application provides an information transmission method. The method may be performed by a core network device, or may be performed by a component (for example, a processor, a chip, or a chip system) of a core network device, and includes: obtaining first public land mobile network PLMN information of a first cell; determining, based on the first PLMN information, to send first information to a first access network device, where the first access network device is an access network device corresponding to the first cell, the first information includes a PLMN list, and the PLMN list includes a PLMN set that allows a terminal device to perform a first operation; and sending the first information to the first access network device.

According to the method, the core network device may send the first information to the first access network device corresponding to the first cell in time. After receiving the first information, the first access network device may send configuration information of the first operation to the terminal device, to ensure continuity of performing the first operation by the terminal device.

With reference to the first aspect, in some implementations of the first aspect, that the core network device obtains the first public land mobile network PLMN information corresponding to the first cell includes:
receiving the first PLMN information of the first cell from the first access network device, or determining the first PLMN information of the first cell based on a global identifier of the first cell.

With reference to the first aspect, in some implementations of the first aspect, that the core network device determines, based on the first PLMN information, to send the first information to the first access network device includes:
The core network device determines, when the first PLMN information belongs to the PLMN list and second PLMN information of a second cell does not belong to the PLMN list, to send the first information to the first access network device, where the second cell is a cell in which the terminal device is located before being last handed over to the first cell. The core network device may determine, based on the first PLMN information and the second PLMN information, whether the first access network device corresponding to the first cell receives the first information required for the first operation. When the first access network device does not receive the foregoing first information, the core network device may send the first information to the first access network device in time.

With reference to the first aspect, in some implementations of the first aspect, an access network device corresponding to the second cell is a second access network device, or an access network device corresponding to the second cell is the first access network device.

According to the method, the core network device determines in time that the first access network device corresponding to the first cell may not receive the first information required for the first operation, to send the first information to the first access network device in time, thereby ensuring continuity of performing an MDT by the terminal device.

With reference to the first aspect, in some implementations of the first aspect, the core network device receives a first request from the first access network device, where the first request is for requesting the first information.

With reference to the first aspect, in some implementations of the first aspect, that the core network device determines, based on the first PLMN information, to send the first information to the first access network device includes: determining, when the first PLMN information belongs to the PLMN list, to send the first information to the first access network device.

According to the method, the core network device receives the first request, and can learn that the first access network device corresponding to the first cell may not receive the first information required for the first operation. When the first PLMN information belongs to the PLMN list, the core network device sends the first information to the first access network device in time, to ensure continuity of performing the first operation by the terminal device.

With reference to the first aspect, in some implementations of the first aspect, when the first PLMN information does not belong to the PLMN list, the core network device does not send the first information to the first access network device. According to the method, the core network can avoid sending invalid signaling, to ensure effectiveness of performing the first operation by the terminal device.

With reference to the first aspect, in some implementations of the first aspect, the first information further includes serving PLMN information, and the serving PLMN information is a PLMN bound when the first operation is performed before the handover to the first cell. According to the method, the first access network device can obtain a tracking area code block list based on the serving PLMN information, to avoid an incorrect index of the tracking area code block list caused by a PLMN change.

With reference to the first aspect, in some implementations of the first aspect, the first operation may be minimization of drive test MDT measurement or quality of experience QoE measurement.

According to a second aspect, an embodiment of this application provides an information transmission method. The method may be performed by a terminal device, or may be performed by a component (for example, a processor, a chip, or a chip system) of a terminal device, and includes: obtaining first public land mobile network PLMN information of a first cell; determining, based on the first PLMN information, to send first information to a first access network device, where the first access network device is an access network device corresponding to the first cell, the first information includes a PLMN list, and the PLMN list includes a PLMN set that allows a terminal device to perform a first operation; and sending the first information to the first access network device.

According to the method, the terminal device may send the first information to the first access network device corresponding to the first cell in time. After receiving the first information, the first access network device may activate the terminal device to perform the first operation, to ensure continuity of performing the first operation by the terminal device.

With reference to the second aspect, in some implementations of the second aspect, before the terminal device obtains the first public land mobile network PLMN information corresponding to the first cell, the terminal device receives and stores the first information.

According to the method, after successfully performing the first operation, the terminal may store the first information corresponding to the first operation. After the terminal device is handed over to the first cell, the terminal device can directly perform signaling interaction with the first access network device corresponding to the first cell. Signaling overheads between the first access network device and the core network device are reduced.

With reference to the second aspect, in some implementations of the second aspect, that the terminal device obtains the first public land mobile network PLMN information corresponding to the first cell includes: The terminal device receives the first PLMN information of the first cell from the first access network device.

With reference to the second aspect, in some implementations of the second aspect, when the first PLMN information belongs to the PLMN list, the terminal device determines to send the stored first information to the first access network device.

With reference to the second aspect, in some implementations of the second aspect, the stored first information further includes serving PLMN information, and the serving PLMN information is a PLMN bound when the first operation is performed before the handover to the first cell. According to the method, after obtaining the first information, the first access network device can obtain a tracking area code block list based on the serving PLMN information, to avoid an incorrect index of the tracking area code block list caused by a PLMN change.

According to a third aspect, an embodiment of this application provides an information transmission method. The method may be performed by an access network device, or may be performed by a component (for example, a processor, a chip, or a chip system) of an access network device, and includes: sending a first request, where the first request indicates that a first access network device requests first information for performing a first operation in a first cell; and receiving the first information, where the first information includes a PLMN list, and the PLMN list indicates configuration information that is of the first operation and that is to be sent by the first access network device to a terminal device.

According to the method, the first access network device can request first information of an MDT from the core network device in time, to ensure continuity of performing the MDT by the terminal device.

With reference to the third aspect, in some implementations of the third aspect, the first operation may be minimization of drive test MDT measurement or quality of experience QoE measurement.

With reference to the third aspect, in some implementations of the third aspect, that the first access network device sends the first request includes: The first access network device sends the first request when learning that first PLMN information is different from second PLMN information, where the first PLMN information is a PLMN of the first cell, the second PLMN information is a PLMN of a second cell, and the second cell is a cell in which the terminal device is located before being last handed over to the first cell.

According to the method, the first access network device may determine that the first request needs to be sent to the core network device, to obtain the first information required for configuring the first operation, to ensure validity of the first request.

With reference to the third aspect, in some implementations of the third aspect, that the first access network device sends the first request includes: The first access network device receives first indication information from the terminal device, and sends the first request, where the first indication information indicates that first PLMN information is different from second PLMN information, the first PLMN information is a PLMN of the first cell, the second PLMN information is a PLMN of a second cell, and the second cell is a cell in which the terminal device is located before being last handed over to the first cell.

According to the method, the first access network device may determine that the first request needs to be sent to the core network device, to obtain the first information required for configuring the first operation, to ensure validity of the first request.

With reference to the third aspect, in some implementations of the third aspect, the first information further includes serving PLMN information, and the serving PLMN information is a PLMN bound when the first operation is performed before the handover to the first cell.

According to the method, after obtaining the first information, the first access network device can obtain a tracking area code block list based on the serving PLMN information, to avoid an incorrect index of the tracking area code block list caused by a PLMN change.

According to a fourth aspect, an embodiment of this application provides a throughput determining method. The method may be performed by an access network device, or may be performed by a component (for example, a processor, a chip, or a chip system) of an access network device, and includes: sending, by a first node, configuration information of throughput measurement to a second node; performing, by the first node and the second node, the throughput measurement based on the configuration information of the throughput measurement; and determining a throughput of a split bearer based on throughput statistics information of the first node and throughput statistics information of the second node.

According to the method, the first node can obtain the throughput of the split bearer, and further measure performance of a communication system through the throughput.

With reference to the fourth aspect, in some implementations of the fourth aspect, the configuration information of the throughput measurement includes one or more of the following information: a measurement periodicity, start time information, and end time information. By using the configuration information, the first node and the second node can collect the throughput statistics information based on the configuration information.

With reference to the fourth aspect, in some implementations of the fourth aspect, based on the measurement periodicity, the first node receives the throughput statistics information from the second node, and calculates a throughput of a split bearer in each periodicity based on the throughput statistics information of the first node and the throughput statistics information of the second node. The throughput statistics information of the first node is throughput statistics information between the first node and the terminal device in a measurement periodicity, and the throughput statistics information of the second node is throughput statistics information between the second node and the terminal device in a measurement periodicity.

With reference to the fourth aspect, in some implementations of the fourth aspect, the throughput of the split bearer in each periodicity is as follows:

$$X_{\text{split\_bearer}} = (X_{11} + X_{12} + ... + X_{1m} + X_{21} + X_{22} + ... + X_{2n})/T_{\text{all}} \ (1)$$

$T_{\text{all}}$ is determined based on $T_{11}$, $T_{12}$, ..., and $T_{1m}$, and $T_{21}$, $T_{22}$, ..., and $T_{2n}$, and $T_{\text{all}}$ is calculated in one of the following manners:

$$T_{\text{all}} = \max (T_{11} + T_{12} + ... + T_{1m}, \ T_{21} + T_{22} + ... + T_{2n}) \ (2a)$$

$$T_{all} = T_{11}+T_{12}+...+T_{1m} \quad (2b)$$

$$T_{all} = T_{21}+T_{22}+...+T_{2n} \quad (2c)$$

$$T_{all} = (T_{11}+T_{12}+...+T_{1m}+T_{21}+T_{22}+...+T_{2n})/2 \quad (2d)$$

$$T_{all} = T_{measurement\ periodicity} \quad (2e)$$

$X_{11}$, $X_{12}$, ..., and $X_{1m}$ are amounts of data transmitted m times between the first node and the terminal device, and $T_{11}$, $T_{12}$, ..., and $T_{1m}$ are transmission time lengths of the foregoing m times of transmission. $X_{21}$, $X_{22}$, ..., and $X_{2n}$ are amounts of data transmitted n times between the second node and the terminal device, and $T_{21}$, $T_{22}$, ..., and $T_{2n}$ are transmission time lengths of the foregoing n times of transmission.

With reference to the fourth aspect, in some implementations of the fourth aspect, when the first node and the second node complete the throughput measurement in the K measurement periodicities, the first node sends stop information to the second node, and the first node and the second node stop the throughput measurement, where K is an integer greater than or equal to 1, and K may be a parameter carried in the configuration information of the throughput measurement, or may be preset and separately stored in the first node and the second node.

According to the method, the first node can obtain the throughput of the split bearer, and further measure performance of a communication system through the throughput.

With reference to the fourth aspect, in some implementations of the fourth aspect, when no data is transmitted between the first node/second node and the terminal device in K consecutive measurement periodicities, the first node sends the stop information to the second node, and the first node and the second node stop the throughput measurement.

According to the method, the first node can flexibly control starting and ending of the throughput measurement, to save energy.

According to a fifth aspect, an embodiment of this application provides an apparatus, to implement the method in the first aspect to the fourth aspect, or any possible implementation of the first aspect to the fourth aspect. The apparatus includes corresponding units or components configured to perform the foregoing methods. The units included in the apparatus may be implemented in a software and/or hardware manner. For example, the apparatus may be a terminal device, an access network device, or a core network device, or may be a chip, a chip system, or a processor that supports a terminal device, an access network device, a core network device, or the like in implementing the foregoing methods.

According to a sixth aspect, an embodiment of this application provides an apparatus, including a processor, where the processor is coupled to a memory, the memory is configured to store a program or instructions, and when the program or the instructions are executed by the processor, the apparatus is enabled to implement the method in the first aspect to the fourth aspect, or any possible implementation of the first aspect to the fourth aspect.

According to a seventh aspect, an embodiment of this application provides a computer-readable storage medium, storing a computer program or instructions, where when the computer program or the instructions are executed, a computer is enabled to perform the method in the first aspect to the fourth aspect, or any possible implementation of the first aspect to the fourth aspect.

According to an eighth aspect, an embodiment of this application provides a computer program product, including computer program code. When the computer program code is run on a computer, the computer is enabled to perform the method in the first aspect to the fourth aspect, or any possible implementation of the first aspect to the fourth aspect.

According to a ninth aspect, an embodiment of this application provides a chip, including a processor, where the processor is coupled to a memory, the memory is configured to store a program or instructions, and when the program or the instructions are executed by the processor, the chip is enabled to implement the method in the first aspect to the fourth aspect, or any possible implementation of the first aspect to the fourth aspect.

According to a tenth aspect, an embodiment of this application provides a communication system, including: the apparatus according to the fifth aspect.

According to an eleventh aspect, an embodiment of this application provides a communication system, including: the apparatus according to the sixth aspect.

**BRIEF DESCRIPTION OF DRAWINGS**

FIG. 1 is a schematic diagram of a communication system used in an embodiment of this application;

FIG. 2 is a schematic diagram of an architecture of a communication system used in an embodiment of this application;

FIG. 3A and FIG. 3B are schematic diagrams of scenarios to which an embodiment of this application is applicable;

FIG. 4 is a schematic diagram of an information transmission method according to this application;

FIG. 5 is a schematic diagram of another information transmission method according to this application;

FIG. 6 is a schematic diagram of another information transmission method according to this application;

FIG. 7 is a schematic diagram of a scenario to which an embodiment of this application is applicable;

FIG. 8 is a schematic diagram of a throughput calculation method according to an embodiment of this application;

FIG. 9 is a schematic diagram of throughput statistics information in a measurement periodicity according to an embodiment of this application;

FIG. 10 is a schematic diagram of a structure of a communication apparatus according to an embodiment of this application;

FIG. 11 is a schematic diagram of a structure of a terminal device according to an embodiment of this application;

FIG. 12 is a schematic diagram of a structure of an access network device according to an embodiment of this application; and

FIG. 13 is a schematic diagram of a structure of still a communication apparatus according to an embodiment of this application.

## DESCRIPTION OF EMBODIMENTS

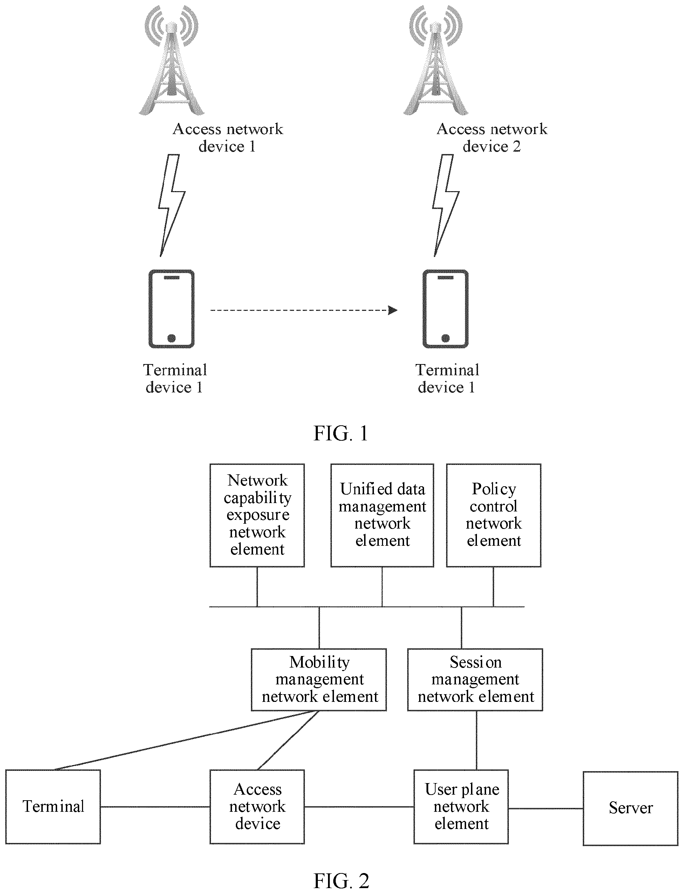

A method and an apparatus provided in embodiments of this application may be applied to a communication system. FIG. 1 is a schematic diagram of a structure of a communication system. The communication system may include at least one terminal device and at least one access network device. In FIG. 1, an example in which one terminal device and two access network devices are included is used. The terminal device 1 may be handed over from the access network device 1 to the access network device 2. It may be understood that quantities of terminal devices and access network devices in FIG. 1 are merely examples. There may be more terminal devices and access network devices in the communication system, and any access network device may provide a service for a terminal device in a coverage area.

The method and the apparatus provided in embodiments of this application may be used in various communication systems, for example, a fourth generation (4th generation, 4G) communication system, a 4.5G communication system, a 5G communication system, a wireless-fidelity (wireless-fidelity, Wi-Fi) system, and a system integrating various other communication systems, or a future evolved communication system (for example, a 5.5G communication system or a 6G communication system).

The method and the apparatus provided in embodiments of this application may be applied to various communication system architectures. FIG. 2 is a schematic diagram of an architecture of a communication system. In the architecture of the communication system, a terminal accesses a core network through an access network (radio access network, RAN) device. The terminal may establish a connection to a data network (data network, DN) or a server in a data network through an access network and the core network. The data network may include, for example, an operator service, an Internet (Internet), a third-party service, or the like. In the 4G communication system, the connection may be a packet data network connection (packet data network connection, PDN connection) or a bearer. In the 5G communication system, the connection may be a protocol data unit session (protocol data unit session, PDU Session). In a future communication system such as the sixth generation (6th generation, 6G) communication system, the connection may be a PDU session, a PDN connection, or another similar concept. This is not limited in embodiments of this application. In embodiments of this application, the connection established between the terminal and the data network or the server may also be referred to as a session.

The access network device in this application may be any device having a wireless transceiver function, and includes but is not limited to: an evolved base station (NodeB or eNB or e-NodeB, evolutional NodeB) in LTE, a base station (gNodeB or gNB) or a transceiver point (transmission receiving point/transmission reception point, TRP) in NR, a base station subsequently evolved from 3GPP, an access node in a Wi-Fi system, a wireless relay node, a wireless backhaul node, a core network device, and the like. The base station may be: a macro base station, a micro base station, a picocell base station, a small cell, a relay station, a balloon station, or the like. A plurality of base stations may support networks of a same technology described above, or may support networks of different technologies described above. The base station may include one or more co-site or non-co-site TRPs. The access network device may alternatively be a server (for example, a cloud server), a radio controller in a cloud radio access network (cloud radio access network, CRAN) scenario, a central unit (central unit, CU), and/or a distributed unit (distributed unit, DU). The access network device may alternatively be a server, a wearable device, a machine communication device, a vehicle-mounted device, a smart screen, or the like. The following uses an example in which the access network device is a base station for description. The plurality of access network devices may be base stations of a same type, or may be base stations of different types. The base station may communicate with the terminal device, or may communicate with the terminal device through a relay station. The terminal device may communicate with a plurality of base stations using different technologies. For example, the terminal device may communicate with a base station supporting an LTE network, or may communicate with a base station supporting a 5G network, and may further support dual connection to a base station in an LTE network and a base station in a 5G network.

The terminal in this application is a device with the wireless transceiver function, may be deployed on land, where the deployment includes indoor or outdoor, or handheld, wearable, or in-vehicle deployment, may be deployed on water (for example, on a ship), or may be deployed in air (for example, on aircraft, a balloon, or a satellite). The terminal may be a mobile phone (mobile phone), a tablet computer (Pad), a computer with the wireless transceiver function, a virtual reality (virtual reality, VR) terminal device, an augmented reality (augmented reality, AR) terminal device, a terminal in industrial control, an in-vehicle terminal device, a terminal in self driving (self driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), and the like. An application scenario is not limited in embodiments of this application. The terminal may also be referred to as a terminal device, user equipment (user equipment, UE), an access terminal device, an in-vehicle terminal, an industrial control terminal, a LTE unit, a LTE station, a mobile station, a remote station, a remote terminal device, a mobile device, a UE terminal device, a wireless communication device, a machine terminal, a UE agent, a UE apparatus, or the like. The terminal may be fixed or mobile.

As an example instead of a limitation, in this application, the terminal may be a wearable device. The wearable device may also be referred to as a wearable intelligent device, and is a generic term for wearable device such as glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In this application, the terminal device may be a terminal in an Internet of things (internet of things, IoT) system. An IoT is an important component of future information technology development. A main technical feature of the IoT is connecting an object to a network by using a communication technology, to implement an intelligent network of human-machine interconnection and thing-thing interconnection. The terminal device in this application may be a terminal in machine type communication (machine type communication, MTC). The terminal device in this application may be an in-vehicle module, an in-vehicle component, an in-vehicle chip, or an in-vehicle unit that is built in a vehicle as one or more components or units. The vehicle may implement a method in this application by using the in-vehicle module, the in-vehicle component, the in-vehicle chip, or the in-vehicle unit that is built in the vehicle. Therefore, embodiments of this application may be applied to an Internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

The core network device includes a mobility management network element, a session management network element, and a user plane network element. Optionally, the core network device further includes a network capability exposure network element and/or a policy control network element.

The mobility management network element is mainly used for mobility management in a mobile network, such as user location update, user registration network, and user handover. In the 4G communication system, the mobility management network element may be a mobility management entity (mobility management entity, MME). In the 5G communication system, the mobility management network element may be an access and mobility management function (access and mobility management function, AMF).

The session management network element is mainly used for session management in a mobile network, for example, session establishment, modification, and release. Specific functions include allocating an Internet protocol (internet protocol, IP) address to a user, selecting a user plane network element that provides a packet forwarding function, and the like. In the 4G communication system, the session management network element may be a serving gateway control plane (serving gateway control plane, SGW-C), a packet data network gateway control plane (packet data network gateway control plane, PGW-C), or a network element in which an SGW-C and a PGW-C are integrated. In the 5G communication system, the session management network element may be a session management function (session management function, SMF).

A unified data management network element stores user root keys and authentication related subscription data, and generates 5G authentication parameters and authentication vectors. In the 4G communication system, the unified data management network element may be a home subscriber server (home subscriber server, HSS). In the 5G communication system, the unified data management network element may be unified data management (Unified data Management, UDM).

The user plane network element is mainly configured to forward a user data packet according to a routing rule of the session management network element. In the 4G communication system, the user plane network element may be a serving gateway user plane (serving gateway user plane, SGW-U), a packet data gateway user plane (packet data network gateway user plane, PGW-U), or a network element integrating an SGW-U and a PGW-U. In the 5G communication system, the user plane network element may be a user plane function (user plane function, UPF) network element.

The policy control network element has a subscriber subscription data management function, a policy control function, a charging policy control function, quality of service (quality of service, QoS) control, and the like. In the 4G communication system, the policy control network element may be a policy control and charging function (policy control and charging function, PCRF). In the 5G communication system, the policy control network element may be a policy control function (policy control function, PCF).

The network capability exposure network element is mainly configured to open a capability of a communication system to a third party, an application service function, or the like, and transmit information between the third party, an application server, and the communication system. In the 4G communication system, the network capability exposure network element may be a service capability exposure function (service capability exposure function, SCEF). In the 5G communication system, the network capability exposure network element may be a network exposure function (network exposure function, NEF).

In a future communication system such as the 6G communication system, the foregoing network element or device may still use the name of the network element or device in the 4G or 5G communication system, or may have another name. Functions of the foregoing network element or device may be completed by one independent network element, or may be jointly completed by several network elements. This is not limited in embodiments of this application.

In actual deployment, the network elements in the core network device may be deployed on a same physical device or different physical devices. For example, in a possible deployment, the AMF and the SMF may be deployed on a same physical device. For another example, a network element of a 5G core network device and a network element of a 4G core network device may be deployed on a same physical device.

In actual deployment, the network elements in the core network device may be integrated. For example, the mobility management network element and the session management network element may be integrated. For another example, the session management network element and the user plane network element may be integrated. When two or more network elements are integrated, interaction between the two or more network elements provided in this application becomes an internal operation of the integrated network element or may be omitted.

Compared with a core network of the 4G communication system, a core network of the 5G communication system uses an architecture in which a control plane and a user plane are separated and a service-oriented architecture. It may be understood that the solutions in this application are not only applicable to the 5G communication system, but also applicable to an evolved 4G communication system, a future 6G communication system, or the like. A network to which the solutions of this application are applicable may use an architecture in which a control plane and a user plane are separated, or may use an architecture in which a control plane and a user plane are integrated. A network to which the solutions of this application are applicable may use a service-oriented architecture, or may use a non-service-oriented architecture.

It may be understood that, with network evolution, names of the foregoing network elements may change, and functions of the network elements may also be combined, separated, or even changed. However, these changes do not mean that they are out of scope of the solutions in this application.

Some concepts in minimization of drive test (Minimization of Drive-Test, MDT) are first described below in this embodiment of this application.

1. MDT technology

The 3GPP RAN2 working group proposes the minimization of drive test technology. The technology is used by a communication system to automatically collect and analyze UE measurement reports containing location information, and is used to minimize the workload of manual drive tests. A working process of the MDT is as follows: A core network device configures the MDT for an access network device, the access network device configures the MDT for a terminal device, and the terminal device performs MDT measurement.

The existing MDT modes include logged MDT (Logged MDT) and immediate MDT (Immediate MDT). Logged MDT is mainly measurement performed on a terminal device in an idle state (RRC_IDLE) or a terminal device in an RRC inactive state (RRC_INACTIVE). The measurement mainly includes received signal strength measurement performed by the terminal device. Immediate MDT is mainly measurement performed on a terminal device in a connected state (RRC_CONNECTED). The measurement mainly aims at information such as a data volume of the terminal, an IP throughput, a packet transmission delay, a packet loss rate, and a processing delay.

MDT management manners include management based MDT (management based MDT) and signaling based MDT (signaling based MDT). The management based MDT means that the core network device notifies the access network device to perform the MDT. The access network device selects, based on a specific policy, a terminal from terminals covered by the access network device to perform MDT measurement. The signaling based MDT means that the core network device notifies the access network device to select some specific terminals to perform MDT measurement.

The management based MDT and the signaling based MDT are management manners in which the core network device performs the MDT on a user. The management based MDT may include the logged MDT and the immediate MDT, and the signaling based MDT may include the logged MDT and the immediate MDT.

When the terminal device successfully performs the MDT, the unified data management (Unified Data Management, UDM) network element of the core network device stores configuration information when the terminal device performs the MDT. The configuration information may include one or more types of the following information: an MDT mode, an MDT area, an MDT management mode, configuration parameters in this mode, user consent, and the like.

After the core network device successfully configures the MDT for the terminal by using the access network device, the UDM of the core network device may store the configuration information when the terminal device performs the MDT, and send the stored configuration information to the mobility management network element, so that the mobility management network element sends the configuration information to the access network device.

### 2. PLMN list

The PLMN list may be understood as a set of PLMNs that allow the terminal device to perform the MDT, and the list is specified by the core network device. When the terminal device performs a cell handover, if a PLMN of a cell in which the terminal device is located after the handover is not in the PLMN list, the terminal device cannot perform the MDT in the cell.

### 3. User consent (User Consent)

The user consent may also be referred to as user consent information. The user consent indicates whether the terminal allows MDT activation, and content of the user consent includes a PLMN list that supports the terminal device in performing MDT measurement. When a PLMN of a cell in which the terminal device is located is in the PLMN list, the core network device sends the MDT configuration to an access network device corresponding to the cell, and the access network device configures the MDT for the terminal device.

### 4. Tracking area (Tracking Area, TA)

It is an area for recording paging and location update. In the area, the terminal device does not need to update a service, and location management of the terminal may be implemented through the TA, for example, including paging management and location update management. When the terminal device is in an idle state, the core network device can learn of a tracking area in which the terminal device is located; and when the terminal device in the idle state needs to be paged, paging is performed in all cells in the tracking area in which the terminal device is registered. The TA is a cell-level configuration. A same TA may be configured for a plurality of cells, and one cell can belong to only one TA.

### 5. Tracking area code (Tracking Area Code, TAC)

Each TA has its own number. The number may be classified into two types: a tracking area code TAC and a tracking area identity (Tracking Area Identity, TAI). The TAC is defined by an operator as a tracking area number, and the TAI is a global number. The TAI is formed by a mobile country code (Mobile Country Code, MCC) + a mobile network code (Mobile Network Code, MNC) + a TAC. Information about a tracking area with which user equipment is registered is a tracking area identity TAI or a tracking area code TAC. An area scope (area scope) of the MDT can be determined based on the TAC.

### 6. Cell global identifier (Cell Global Identifier, CGI)

The CGI may be used to identify an area covered by a cell. The CGI includes a PLMN and a cell identity. For example, in a 5G NR network, NCGI = PLMN + NCI, where NCGI represents an NR CGI, and NCI represents an NR cell identity (NR Cell Identity). The core network device stores the CGI information corresponding to the cell. It may be understood that there is a correspondence between a PLMN to which each cell belongs and CGI information, and the core network device may obtain the PLMN of the cell based on the CGI information.

7. Serving PLMN

When the terminal device is equipped with the MDT, PLMN information bound to configuration information of the MDT is referred to as a serving PLMN (serving PLMN). For example, when the terminal device is in a cell A, PLMN information of the cell A is a PLMNa, and the PLMN_a is in the PLMN list. The core network device configures the MDT for the terminal device through an access network device 1 corresponding to the cell A, and the terminal device performs the MDT in the cell A. In this case, the UDM of the core network device stores configuration information related to the MDT, where the configuration information includes the PLMN list, and the serving PLMN of the MDT is the PLMN_a. When the terminal device is handed over from the cell A to a cell B, PLMN information of the cell B is a PLMN_b, and the PLMN_b is in the PLMN list. The terminal device continues to perform the MDT. In this case, the serving PLMN of the MDT is still the PLMN_a. When the terminal device is handed over to a cell C, PLMN information of the cell C is a PLMN_c, and the PLMN_c is in the PLMN list. However, the core network device updates the MDT configuration to the terminal device through an access network device 2 corresponding to the cell C. Updated configuration information related to the MDT is stored in the UDM of the core network device. In this case, the serving PLMN of the MDT is the PLMN_c. In the example, the access network device 2 and the access network device 1 may be a same access network device, or may be different access network devices. It may be understood that when the terminal device performs the MDT, a cell handover occurs, PLMN information corresponding to the cell changes, and the serving PLMN of the MDT does not necessarily change. When the access network device configures the MDT for the terminal device, TA information is carried, and the TA information is obtained from a TA list based on an index of the serving PLMN. The access network device determines, based on the TA information, an area scope in which the terminal device performs the MDT.

8. Quality of experience (Quality of Experience, QoE) measurement

The quality of experience measurement is performed for streaming services or voice services. Operators collect user experience measurement values for better network optimization. QoE measurement may also be referred to as application layer measurement. The access network device receives configuration information of the measurement from the core network device, and the access network device sends the configuration to the terminal device through an RRC message. After an RRC layer of the terminal device receives measurement results of the application layer, the measurement results are sent to the access network device.

QoE measurement management manners also include signaling based QoE measurement and management based QoE measurement. QoE measurement counters include an average throughput, an initial playback delay, a buffer level, a playback delay, a deterioration duration, a quantity of consecutive lost packets, a jitter duration, a round-trip delay, an average bit rate, frame freezing, and the like.

QoE measurement is similar to MDT. When the terminal device performs QoE measurement, the terminal device can perform QoE measurement only when a PLMN of a cell in which the terminal device is located is in the PLMN list.

In an actual scenario, after the core network device configures the MDT for the terminal device through the access network device, in a specific scenario, if a cell handover occurs on the terminal device, the terminal device may still perform the MDT in a cell obtained after the handover. For example, a cell A corresponds to an access network device 1, and a cell B corresponds to an access network device 2. When the terminal device is handed over from the cell A to the cell B, if PLMN information of the cell A is a PLMN_a, PLMN information of the cell B is a PLMN_b, the PLMN_a belongs to the PLMN list, and the PLMN_b belongs to the PLMN list, the access network device 1 may send the configuration information related to the MDT to the access network device 2 through user context signaling. The access network device 2 may then configure the MDT for the terminal device located in the cell B.

However, when the PLMN_a belongs to the PLMN list, and the PLMN_b does not belong to the PLMN list, after the handover to the cell B, the access network device 1 cannot send the configuration information related to the MDT to the access network device 2 through the user context signaling. Therefore, the terminal cannot perform the MDT in the cell B. Further, when the terminal device is handed over to a cell C, PLMN information of the cell C is a PLMN_c, and the PLMN_c belongs to the PLMN list, an access network device corresponding to the cell C may still be unable to obtain the configuration information related to the MDT.

Therefore, according to the information transmission method provided in this application, when a cell handover occurs on a terminal device, an access network device corresponding to a cell in which the terminal device is located after the handover can obtain, in time, configuration information when the terminal performs a first operation. This avoids that the terminal device cannot perform the first operation because the access network device cannot obtain configuration information of the first operation in the handover process. It may be understood that, in this embodiment of this application, the MDT is referred to as a first operation, and the first operation may be, for example, QoE measurement.

In this embodiment of this application, an MDT scenario is used as an example to describe the information transmission method in this application. It may be understood that when the MDT in this embodiment of this application is replaced with QoE measurement, the information transmission method described in this embodiment of this application may still be performed.

Embodiments provided in this application are applicable to various different scenarios.

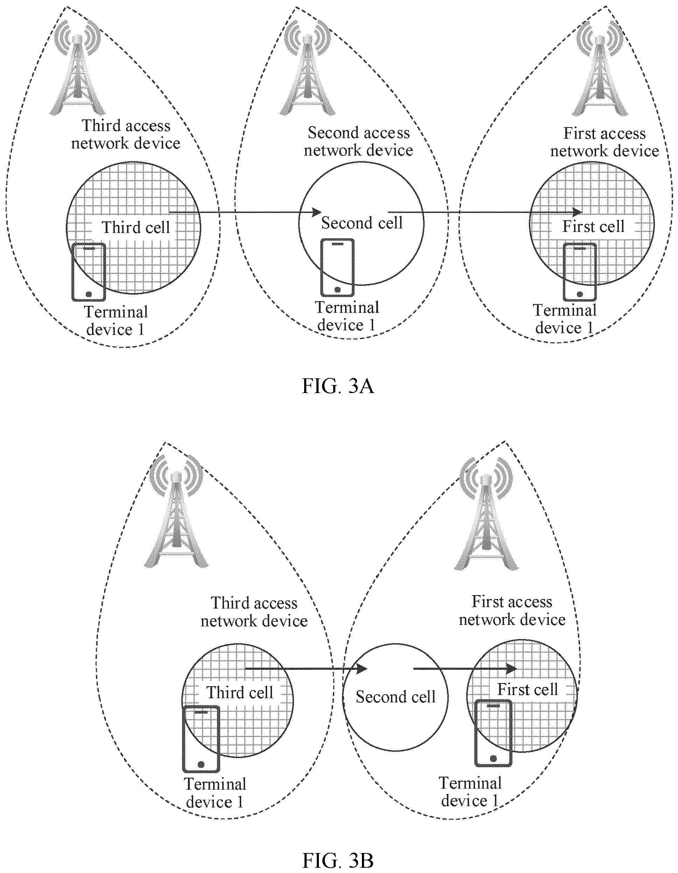

FIG. 3A is a schematic diagram of a scenario to which an embodiment of this application is applicable. In this application scenario, a radio access network includes at least two access network devices: a second access network device and a first access network device. A terminal device moves from a second cell covered by the second access network device to a first cell covered by the first access network device, where a second PLMN of the second cell is different from a first PLMN of the first cell.

FIG. 3B is a schematic diagram of another scenario to which an embodiment of this application is applicable. In this application scenario, a radio access network includes at least two access network devices: a second access network device and a first access network device. A terminal device moves from a third cell covered by the second access network device to a second cell covered by the first access network device. Further, the terminal device is handed over from a second cell to the first cell. Both the second cell and the first cell correspond to the first access network device, and a second PLMN corresponding to the second cell is different from a first PLMN corresponding to the first cell.

The following describes in detail the technical solutions of this application by using specific embodiments with reference to the accompanying drawings. The following embodiments and implementations may be combined with each other, and same or similar concepts or processes may not be described again in some embodiments. It should be understood that the functions explained in this application may be implemented by independent hardware circuits, using software running in conjunction with a processor/microprocessor or a general-purpose computer, using an application-specific integrated circuit, and/or using one or more digital signal processors. When this application is described as a method, it may also be implemented in a computer processor and a memory coupled to the processor.

An MDT mode or an MDT management manner is not limited in embodiments of this application. Any MDT mode or any MDT mode in any management manner is applicable to embodiments of this application. The information transmission method described in embodiments of this application is applicable to all other scenarios in which the PLMN list is lost in a handover process in addition to the MDT. For example, during QoE measurement, if the PLMN list is lost in a handover process, continuity of QoE measurement in a cell handover process can also be ensured by using the information transmission method described in embodiments of this application.

In this embodiment of this application, the terminal device has successfully performed the MDT in a cell covered by an access network device. In this case, unified data management (Unified Data Management, UDM) of the core network device stores first information when the terminal device performs the MDT. The first information includes a PLMN list. The PLMN list indicates a set of available PLMNs that support the terminal device in performing the MDT.

In a possible implementation, the first information may be user consent (User Consent), and the user consent carries the PLMN list.

In another possible implementation, in addition to carrying the PLMN list, the first information may further include one or more of the following information: an MDT mode, an MDT area, an MDT management mode, and configuration parameters in this mode.

For the MDT mode, the MDT area, the MDT management mode, and the configuration parameters in this mode, refer to definitions and descriptions of corresponding concepts in 3GPP TS32.422 and 3GPP TS37.320. Details are not described in this embodiment of this application. It may be understood that explanations of the foregoing concepts are not limited to the definitions and descriptions in the existing protocol.

In another possible implementation, when the MDT is the signaling based MDT, the first information may further include serving PLMN information.

Optionally, the mobility management network element of the core network device may directly obtain the first information from the UDM, and further obtain the PLMN list information.

In this embodiment of this application, the MDT is successfully configured for the terminal device in a cell. The cell is referred to as a starting serving cell, and PLMN information of the starting serving cell is the serving PLMN information of the MDT. It may be understood that the starting serving cell is not necessarily a cell in which the terminal device initially accesses the network, and is merely used to indicate a cell in which the terminal device is currently located when the MDT is configured for the terminal device. A PLMN of the cell is a serving PLMN. Based on the foregoing explanation of the serving PLMN, it may be understood that when the terminal device is handed over from the starting serving cell to a new cell, a PLMN of the new cell belongs to the PLMN list. In other words, the PLMN of the new cell is in the PLMN list, and the terminal device still continues to perform the MDT. If the core network device does not update the configuration information of the MDT, a serving PLMN when the terminal device performs the MDT in the new cell is still the PLMN of the starting serving cell. If the terminal device is in the new cell, an access network device corresponding to the new cell is triggered by the core network device to update the MDT configuration. After updating the MDT configuration, the access network device configures the MDT for the terminal device. The serving PLMN when the terminal device performs the MDT in the new cell is updated to the PLMN of the new cell. Further, it may be understood that, after the core network device updates the MDT configuration, the starting serving cell in which the terminal device performs the MDT is updated to the new cell, and the serving PLMN is updated to the PLMN of the new cell.

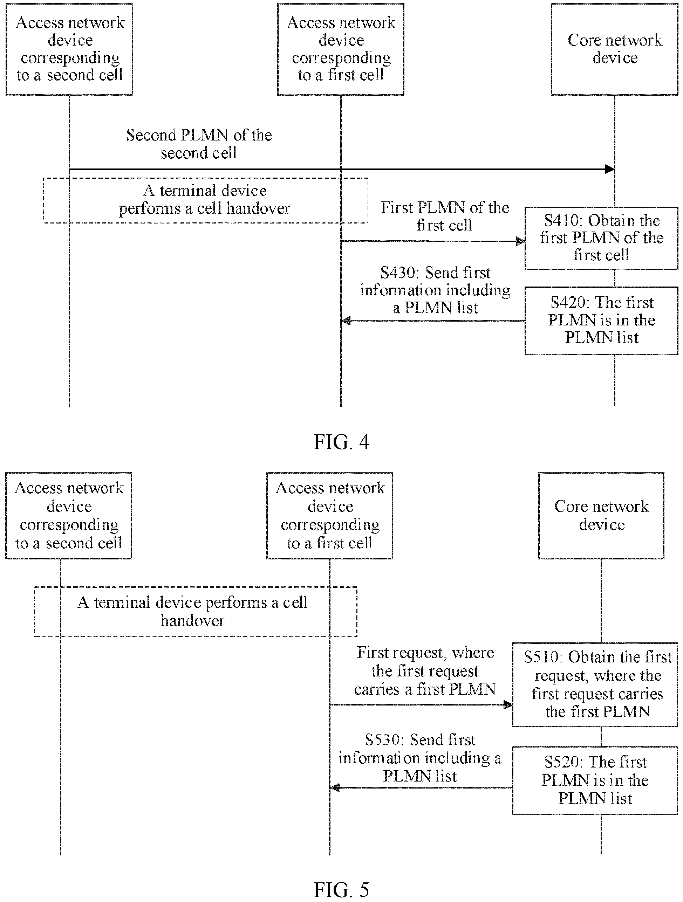

In this embodiment of this application, after the MDT is configured for the terminal device, the terminal device successfully performs the MDT in the third cell, and the terminal device is handed over from the third cell to the second cell. PLMN information of the second cell is referred to as second PLMN information, and the second PLMN information does not belong to the PLMN list. In this case, the terminal cannot perform the MDT in the second cell. The terminal device is handed over from the second cell to the first cell. PLMN information of the first cell is referred to as first PLMN information. If the first PLMN information belongs to the PLMN list, to enable the terminal device to continue to perform the MDT in the first cell, an embodiment of this application provides an information transmission method. FIG. 4 is a schematic interaction diagram of the information transmission method 400. In FIG. 4, an example in which an access network device corresponding to a second cell, an access network device corresponding to a first cell, and a core network device are used as execution entities of the interaction example is used to illustrate the information transmission method. However, the execution entities of the interaction example are not limited in this application. For example, the access network device in FIG. 4 may alternatively be a chip, a chip system, or a processor that supports the access network device in implementing the method, and the core network device in FIG. 4 may alternatively be a chip, a chip system, or a processor that supports the core network device in implementing the method, or a functional network element that is in the core network device and that supports implementing the method.

The method 400 shown in FIG. 4 includes a part 410 to a part 430. According to the method, when a cell handover occurs on a terminal device, a first access network device corresponding to a first cell in which the terminal device is located after the handover may obtain first information when the terminal performs a first operation. This avoids that the terminal device cannot perform the first operation because the first access network device cannot obtain the first information of the first operation in the handover process, and ensures continuity of performing the first operation by the terminal. The following describes the method 400 provided in this embodiment of this application by using an example in which the first operation is an MDT.

410: The core network device obtains first public land mobile network PLMN information of the first cell.

For example, the terminal device performs a cell handover in a third cell (handed over from the third cell to a second cell), and the core network device obtains second PLMN information corresponding to the second cell, where the third cell is a cell in which the terminal device has successfully performed the MDT. The terminal device is then handed over from the second cell to the first cell, and the core network device obtains first PLMN information corresponding to the first cell. The first cell is a first cell after the terminal device is handed over from the second cell. In other words, the second cell is a cell in which the terminal device is located before being last handed over to the first cell.

Optionally, when the terminal device successfully performs the MDT in the third cell, and the terminal device is handed over from the third cell to the second cell, the third access network device corresponding to the third cell may notify the second access network device corresponding to the second cell that the MDT has been successfully configured for the terminal device. When the terminal device is handed over from the second cell to the first cell, the second access network device notifies to the first access network device corresponding to the first cell that the MDT has been successfully configured for the terminal device. According to the method, the first access network device may learn that the terminal device needs to perform the MDT, and then the first access network device determines that the configuration information of the MDT needs to be received from the core network device. A manner in which different access network devices notify that the MDT has been successfully configured for the terminal device is not limited in embodiments of this application. For example, the second access network device may carry the foregoing information in a handover request. Correspondingly, after receiving the handover request, the first access network device obtains the foregoing information carried in the handover request.

In a possible implementation, the terminal device is handed over to the second cell, the second access network device reports the second PLMN information corresponding to the second cell to the core network device, and the core network obtains the second PLMN information. The terminal device is handed over from the second cell to the first cell, the first access network device reports the first PLMN information corresponding to the first cell to the core network device, and the core network obtains the first PLMN information. It may be understood that core network devices connected to the first access network device and the second access network device may be the same or different.

In this embodiment of this application, a manner in which the access network device obtains the PLMN information corresponding to the cell in which the terminal device is located is not limited.

In a possible implementation, the access network device may report the PLMN information of the corresponding cell to the core network device. A manner in which the access network device reports the PLMN information corresponding to the cell is not limited in embodiments of this application. A manner in which the second access network device reports the second PLMN corresponding to the second cell to the core network device is used for description. For example, the second access network device may report the second PLMN information to the core network device by using dedicated signaling, or the second access network device reports the second PLMN information to the core network device by adding the second PLMN information to existing signaling. For example, the existing signaling may be, for example, a path switch request (path switch req). Optionally, the first access network device may report the PLMN information corresponding to the first cell to the core network device in a similar manner.

In another possible implementation, the terminal device is handed over to the second cell, the core network device receives a global identifier CGI of the second cell, and the core network device determines, based on the CGI, the second PLMN information corresponding to the second cell. Optionally, when the terminal device is handed over from the second cell to the first cell, similarly, the core network device may determine, based on a CGI of the first cell, the first PLMN information corresponding to the first cell.

It may be understood that the core network device may obtain the first PLMN information and the second PLMN information in different manners. For example, the first PLMN information is reported by the first access network device to the core network device, and the second PLMN is determined by the core network device based on the CGI of the second cell. For another example, the first PLMN information is determined by the core network device based on the CGI of the first cell, and the second PLMN information is reported by the second access network device to the core network device. It may be understood that a manner in which the core network device obtains the PLMN information of the cell is not limited in this application.

420: The core network device determines, based on the first PLMN information, to send the first information to the first access network device.

In a possible implementation, the core network device determines, based on the second PLMN information and the first PLMN information, whether to send the first information to the first access network device. For example, when the core network device determines that the second PLMN does not belong to a PLMN list, and the first PLMN belongs to the PLMN list, the core network device determines to send the first information to the first access network device, and step 430 is performed. The first information includes the PLMN list, and the PLMN list includes a PLMN set that allows the terminal device to perform the MDT. For another example, when the core network device determines that the second PLMN does not belong to the PLMN list, and the first PLMN does not belong to the PLMN list, the core network device determines not to send the first information to the first access network device.

In a possible implementation, the first information includes user consent (User Consent), and the user consent carries the PLMN list.

In a possible implementation, the first information further includes serving PLMN information.

430: The core network device sends the first information to the first access network device.

In a possible implementation, a mobility management network element of the core network device sends the first information to the first access network device.

Correspondingly, the first access network device receives the first information from the core network device, and may further configure the MDT for the terminal device. This ensures continuity of performing MDT measurement by the terminal device.

In this embodiment of this application, a manner in which the core network device sends the first information to the first access network device is not limited. For example, the core network device may directly send the first information to the first access network device by using dedicated signaling. Alternatively, the core network device sends the first information to the access network device by adding the first information to existing signaling. For example, the existing signaling may be a path switch request response (Path Switch Req Ack).

In a possible implementation, the first information sent by the core network may further include serving PLMN information. In this case, the first access network device may obtain a tracking area code block list based on the received serving PLMN information, to avoid an incorrect index of the tracking area code block list caused by a PLMN change.

In this embodiment of this application, based on the description of the foregoing steps, a cell handover occurs when the terminal device performs the MDT. When the terminal device is handed over from the second cell to the first cell, the first access network device corresponding to the first cell may re-obtain, through the core network device, the first information for performing the MDT by the terminal device. The MDT may be configured for the terminal device, to ensure continuity of performing the MDT by the terminal device.

In this embodiment of this application, the third access network device corresponding to the third cell, the second access network device corresponding to the second cell, and the first access network device corresponding to the first cell may be a same access network device, or may be different access network devices.

For example, when the third access network device, the second access device, and the first access network device are different, because the second PLMN of the second cell does not belong to the PLMN list, the third access network device cannot send the first information to the second access network device through user context signaling. When the terminal device is handed over from the second cell to the first cell, the first access network device may obtain the first information by using the foregoing information transmission method 400, to ensure that the terminal device continues to perform the MDT in the first cell.

For another example, when the second access network device is the same as the first access network device and is denoted as the first access network device, and the first access network device is different from the third access network device, the terminal device is handed over from the third cell to the second cell. Because the second PLMN does not belong to the PLMN list, the third access network device cannot send the first information to the first access network device through the user context signaling. When the terminal device is handed over from the second cell to the first cell, the first access network device may obtain the first information by using the foregoing information transmission method 400, to ensure that the terminal device continues to perform the MDT in the first cell.

For another example, when the third access network device is the same as the second access device and is denoted as the third access network device, and the first access network device is different from the third access network device, the terminal device is handed over from the third cell to the second cell. Because the second PLMN does not belong to the PLMN list, the terminal device cannot perform the MDT in the second cell. When the terminal device is handed over from the second cell to the first cell, the first access network device may obtain the first information by using the foregoing information transmission method 400, to ensure that the terminal device continues to perform the MDT in the first cell.

For another example, when the third access network device, the second access device, and the first access network device are the same and are denoted as the first access network device, that is, the third cell, the second cell, and the first cell all correspond to the first access network device, by using the foregoing information transmission method 400, the first access network device can obtain the first information configured by the core network device, and configure the MDT for the terminal device. In another possible implementation, the terminal device performs a cell handover, but the first access network device remains unchanged. The first access network device may directly configure the MDT for the terminal device located in the first cell.

FIG. 5 is a schematic interaction diagram of another information transmission method 500 according to an embodiment of this application. An example in which a second access network device, a first access network device, and a core network device are used as execution entities of the interaction example is used to illustrate the information transmission method. However, the execution entities of the interaction example are not limited in this application. For example, the access network device in FIG. 5 may alternatively be a chip, a chip system, or a processor that supports the access network device in implementing the method, and the core network device in FIG. 5 may alternatively be a chip, a chip system, or a processor that supports the core network device in implementing the method, or a functional network element that is in the core network device and that supports implementing the method.

The method 500 shown in FIG. 5 includes a part 510 to a part 530. According to the method, when a cell handover occurs on a terminal device, a first access network device corresponding to a first cell in which the terminal device is located after the handover may obtain first information when the terminal performs a first operation. This avoids that the terminal device cannot perform the first operation because the first access network device cannot obtain the first information in the handover process, and ensures continuity of performing the first operation by the terminal. The following describes the method 500 provided in this embodiment of this application by using an example in which the first operation is an MDT.

510a: The core network device obtains first PLMN information of the first cell.

In this embodiment of this application, a manner in which the access network device obtains the first PLMN information of the first cell in which the terminal device is located is not limited. For details, refer to the corresponding description in part 410 in the foregoing information transmission method 400. Details are not described herein again.

510b: The core network device receives a first request from the first access network device.

When the terminal device is handed over to the first cell, the first access network device corresponding to the first cell sends the first request to the core network device, where the first request indicates that the first access network device requests, from the core network device, the first information for performing the MDT by the terminal device. Correspondingly, the core network device receives the first request.

It may be understood that a specific name of the first request is not limited in embodiments of this application. The first request is merely a possible name, and the first request indicates that the first access network device requests, from the core network device, the first information for performing the MDT by the terminal device. Any other information that can implement the foregoing function should be understood as the first request in the solutions of this application.

For content description of the first information, refer to the corresponding description in part 420 in the foregoing information transmission method 400. Details are not described herein again.

The sending of the first request by the first access network device to the core network device may be unconditional, or may be conditional. The first request may be sent conditionally. For example, the first request is sent when the first access network device learns that PLMNs of cells are different (or PLMN information changes) before and after the handover.

In a possible implementation, the first access network device may send the first request to the core network device when the terminal device indicates that the first PLMN information is different from the second PLMN information. For example, when the terminal device is in the second cell, the terminal device obtains the second PLMN information of the second cell. When the terminal device is handed over from the second cell to the first cell, the terminal device obtains the first PLMN information of the first cell. If the terminal device determines that the first PLMN information is different from the second PLMN information, the terminal device indicates, to the first access network device, that the first PLMN information is different from the second PLMN (to be specific, sends a first indication). The first access network device receives the first indication, and sends the first request to the core network device. Correspondingly, the core network device receives the first request.

It may be understood that the first indication indicates that when a cell handover occurs on the terminal device, PLMN information of cells is different before and after the handover. A specific name of the first indication is not limited in embodiments of this application. The first indication is merely a possible name, and there may be another name. For example, the first indication may be referred to as a PLMN change indication, or any other information that can implement the foregoing function should be understood as the first indication in the solutions of this application.

In another possible implementation, the first access network device may determine, based on PLMN information of cells before and after the handover, whether the PLMN information changes, so that the first access network device sends the first request to the core network device when determining that the PLMN information changes. For example, when the terminal device is handed over from the second cell to the first cell, the second access network device corresponding to the second cell sends the second PLMN information to the first access network device corresponding to the first cell, and the first access network device receives the second PLMN information. When the first access network device determines that the second PLMN information is different from the first PLMN information, the first access network device sends the first request to the core network device. Correspondingly, the core network device receives the first request.

In a possible implementation, the first request may be carried in existing signaling sent by the first access network device to the core network device. For example, the existing signaling may be, for example, a path switch request. Correspondingly, the access network device receives the path switch request signaling, and obtains the first request.

It may be understood that a sequence of performing steps 510a and 510b in this embodiment of this application may not be limited. For example, step 510a is performed before step 5 10b, or step 510b is performed before step 510a. It should be noted that, 510a and 510b are not shown in the figure.

In another possible implementation, 510a and 510b may be performed together as step 510. Details are as follows:

510: The core network device receives a first request from the first access network device, where the first request includes the first PLMN information of the first cell.

When the first access network device sends the first request, the first request carries the first PLMN information of the first cell. Correspondingly, when receiving the first request, the access network device obtains the first PLMN information. When the first PLMN information is carried in the first request, the method helps reduce signaling overheads between the first access network device and the core network device.

520: The core network device determines, based on the first PLMN information, to send the first information to the first access network device.

When the core network device determines that the first PLMN information belongs to the PLMN list, the core network device determines to send the first information to the first access network device.

In a possible embodiment, when the core network device determines that the first PLMN information does not belong to the PLMN list, the core network device determines not to send the first information to the first access network device.

530: The core network device sends the first information to the first access network device.

Specifically, for step 530, refer to the corresponding description of step 430 in the foregoing information transmission method 400. Details are not described herein again.

In this embodiment of this application, based on the description of the foregoing steps, when a cell handover occurs on the terminal device, the first access network device may re-obtain, by sending the first request information to the core network, the first information for performing the MDT by the terminal device, and the first access network device may reconfigure the MDT for the terminal device. This ensures continuity of performing the MDT by the terminal device.

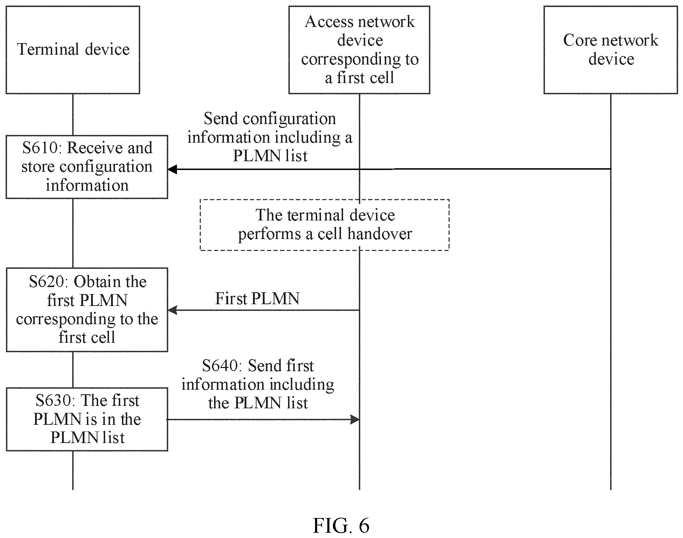

FIG. 6 is a schematic interaction diagram of another information transmission method 600 according to an embodiment of this application. An example in which a terminal device, a first access network device, and a core network device are used as execution entities of the interaction example is used to illustrate the information transmission method. However, the execution entities of the interaction example are not limited in this application. For example, the terminal in FIG. 6 may alternatively be a chip, a chip system, or a processor that supports the terminal in implementing the method. The access network device in FIG. 6 may alternatively be a chip, a chip system, or a processor that supports the access network device in implementing the method. The core network device in FIG. 6 may alternatively be a chip, a chip system, or a processor that supports the core network device in implementing the method, or a functional network element that is in the core network device and that supports implementing the method.

The method 600 shown in FIG. 6 includes a part 610 to a part 640. According to the method, when a cell handover occurs on the terminal, the first access network device obtains, from the terminal device, first information for performing a first operation by the terminal device. This avoids that the terminal device cannot perform the first operation because the first access network device cannot obtain the first information in the handover process, and ensures continuity of performing the MDT by the terminal. The following describes the method 600 provided in this embodiment of this application by using an example in which the first operation is an MDT.

610: The terminal device receives and stores the first information.

The terminal device successfully performs the MDT in a cell. In this case, the terminal device stores first information, where the first information includes configuration information for performing the MDT by the terminal device. For a definition and content of the first information, refer to the explanation of the first information in step 410 in the foregoing embodiment. Details are not described herein again.

It may be understood that a manner of transmitting the first information is not limited in embodiments of this application. For example, the first information is sent in a format of radio resource control signaling, or the first information is sent in a format of signaling of a control element at a multimedia access control layer. Alternatively, the first information is sent in another manner that can implement signaling transmission.

Optionally, when the terminal device performs the MDT, the core network device may update configuration information of the MDT, and denotes the configuration information as second information. The terminal device receives and stores the second information. It may be understood that the first information stored in the terminal device is updated to the second information. For ease of understanding and description, the second information is still denoted as the first information.

620: The terminal device obtains PLMN information of the first cell.

For example, the terminal device performs a cell handover and is handed over to the first cell, and the terminal device receives the first PLMN information from the first cell corresponding to the first access network device.

630: The terminal device determines, based on the first PLMN, to send the first information to the first access network device.

If the terminal device determines, based on the received first PLMN information, that the first PLMN is in a PLMN list, the terminal device determines to send the first information to the first access network device corresponding to the first cell.

In a possible embodiment, if the terminal device determines that the first PLMN does not belong to the PLMN list, the terminal device determines not to send the first information to the first access network device.

640: The terminal device sends the first information to the first access network device.

In this embodiment of this application, based on the description of the foregoing steps, when a network handover occurs on the terminal device, the first access network device may re-obtain, through the terminal device, the first information for performing the MDT by the terminal device, to reduce signaling interaction between the first access network device and the core network device. This ensures continuity of performing the MDT by the terminal device. In MDT measurement, how to calculate a throughput under a split bearer (split bearer) is also an urgent problem to be resolved.

An embodiment of this application provides a throughput determining method, to implement throughput calculation in a split bearer scenario.

In this embodiment of this application, some concepts in the split bearer (split Bearer) scenario are first described below.

1. Dual-connectivity (Dual-Connectivity, DC)

Dual connectivity is an important technology introduced in 3GPP Release-12. With the dual connectivity technology, LTE macro and micro base stations can use existing non-ideal backhaul (non-ideal backhaul) X2 interfaces to implement carrier aggregation, to provide higher data rates for users and improve spectral efficiency and load balancing through macro/micro networking. A terminal device that supports dual connectivity can be connected to two LTE base stations at the same time, increasing a throughput of a single user.

In 3GPP Release-14, the dual connectivity technology of LTE and 5G are defined based on the LTE dual connectivity technology. LTE/5G dual connectivity is a key technology for operators to implement LTE and 5G converged networking and flexible deployment scenarios. In the early stage of 5G, fast deployment can be implemented based on the existing LTE core network. In the later stage, comprehensive network coverage can be implemented through joint LTE and 5G networking, improving radio resource utilization of the entire network system, reducing a system handover delay, and improving user and system performance.

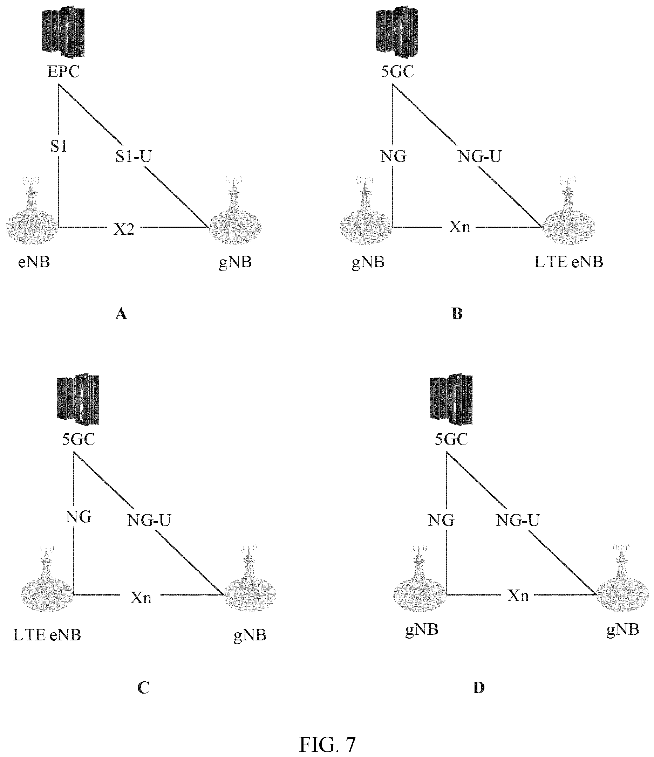

There are various combinations of LTE/5G and 5G/5G dual connectivity modes, as shown in FIG. 7, including:

(1) When the core network is an EPC, an LTE base station acts as a master station, and an NR base station acts as a secondary station, as shown in A in FIG. 7. In this case, there is an X2 interface between the LTE base station and the NR base station, there is at least a control plane connection, and there may be a user plane connection. There is an S1 interface between the LTE base station and the EPC, there is at least a control plane connection, and there may be a user plane connection. There is an S1-U interface between the NR base station and the EPC, that is, only the user plane connection is allowed. In this case, the LTE base station may provide an air interface resource for a user through at least one LTE cell. In this case, the at least one LTE cell is referred to as a master cell group (Master Cell Group, MCG). Correspondingly, the NR base station may alternatively provide an air interface resource for the user through at least one NR cell. In this case, the at least one NR cell is referred to as a secondary cell group (Secondary Cell Group, SCG).

(2) When the core network is a 5GC, an LTE base station acts as a primary station, and an NR base station acts as a secondary station, as shown in B in FIG. 7. In this case, there is an Xn interface between the LTE base station and the NR base station, there is at least a control plane connection, and there may be a user plane connection. There is an NG interface between the LTE base station and the 5GC, there is at least a control plane connection, and there may be a user plane connection. There is an NG-U interface between the NR base station and the 5GC, that is, only the user plane connection is allowed. In this case, the LTE base station may provide an air interface resource for a user through at least one LTE cell. In this case, the at least one LTE cell is referred to as an MCG. Correspondingly, the NR base station may alternatively provide an air interface resource for the user through at least one NR cell. In this case, the at least one NR cell is referred to as an SCG.

(3) When the core network is a 5GC, an NR base station acts as a primary station, and an LTE base station acts as a secondary station, as shown in C in FIG. 7. In this case, there is an Xn interface between the NR base station and the LTE base station, there is at least a control plane connection, and there may be a user plane connection. There is an NG interface between the NR base station and the 5GC, there is at least a control plane connection, and there may be a user plane connection. There is an NG-U interface between the NR base station and the 5GC, that is, only the user plane connection is allowed. In this case, the NR base station may provide an air interface resource for a user through at least one NR cell. In this case, the at least one NR cell is referred to as an MCG. Correspondingly, the LTE base station may alternatively provide an air interface resource for the user through at least one LTE cell. In this case, the at least one LTE cell is referred to as an SCG.

(4) When the core network is a 5GC, both master and secondary stations are NR base stations, as shown in D in FIG. 7. An interface between the master and secondary stations is an Xn interface, there is at least a control plane connection, and there may be a user plane connection. There is an NG interface between the master NR base station and the 5GC, there is at least a control plane connection, and there may be a user plane connection. There is an NG-U interface between the secondary NR base station and the 5GC. In other words, only a user plane connection is allowed. In this case, the master NR base station may provide an air interface resource for a user through at least one NR cell. In this case, the at least one NR cell is referred to as an MCG. Correspondingly, the secondary NR base station may alternatively provide an air interface resource for the user through at least one NR cell. In this case, the at least one NR cell is referred to as an SCG.

2. Master node (master node, MN)

In MR-DC, it is a node connected to a control plane and a core network.

3. Secondary node (Secondary node, SN)

In MR-DC, it is a node not connected to a control plane and a core network, but is a radio access node that can provide additional auxiliary radio resources for LTE.

4. Master cell group (Master Cell Group, MCG)

It is a group of serving cells associated with a master node (Master node, MN), and includes an SpCell (PCell) and one or more SCells that may exist. The PCell is a primary cell (Primary cell) and the boss of all the cells in the MCG, and is the first cell connected to the user in the MCG. The SCell is a secondary cell (Secondary cell), and is a cell other than the PCell in the master cell group.

5. Secondary cell group (Secondary Cell Group, SCG)

It is a group of serving cells associated with a secondary node (Secondary node, SN), and includes an SpCell (PSCell) and one or more SCells that may exist. The PSCell is the primary and secondary cell and the boss of all the cells in the SCG, and is the first cell connected to the use in the SCG. Cells other than the PSCell in the SCG are also referred to as SCells.

6. Dual connectivity bearer

A data unit carried by an MN may be sent by using an MN air interface resource and/or an SN air interface resource, and a data unit carried by an SN may be sent by using an MN air interface resource and/or an SN air interface resource. When the data unit is sent only by using the MN air interface resource, it is referred to as sending the data unit by using an MCG bearer. When the data unit is sent only by using the SN air interface resource, it is referred to as sending the data unit by using an SCG bearer. When the data unit is sent by using both the MN air interface resource and the SN air interface resource, it is referred to as sending the data unit by using a split bearer, and the split bearer includes an MCG split bearer and an SCG split bearer.

MCG bearer: In MR-DC, it is a radio bearer RB of an RLC bearer that exists only in the MCG.

SCG bearer: In MR-DC, it is a radio bearer RB of an RLC bearer that exists only in the SCG.

Split bearer: In MR-DC, it is a radio bearer RB of an RLC bearer that exists in the MCG and the SCG. An anchor node of the split bearer may be understood as a node in which a PDCP entity of the split bearer is located.

MN Terminated bearer: In the MR-DC, it is a radio bearer RB of a PDCP entity that exists in the MN.

SN Terminated bearer: In the MR-DC, it is a radio bearer RB of a PDCP entity that exists in the SN.

7. Anchor

In dual connectivity, the anchor refers to a node through which signaling access is performed. For example, in EN-DC non-standalone networking, the anchor is an LTE base station, the anchor is connected to an LTE core network, and signaling is transmitted through the LTE. In NE-DC non-standalone networking, the anchor is an NR base station, the anchor is connected to an NR core network, and signaling is transmitted through the NR.

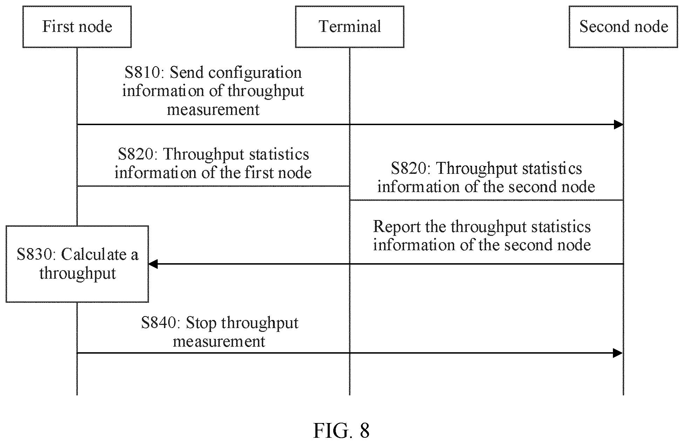

FIG. 8 is a schematic interaction diagram of a throughput determining method 800 according to an embodiment of this application. An example in which a terminal device, a first node, and a second node are used as execution entities of the interaction example is used to illustrate the method. However, the execution entities of the interaction example are not limited in this application. For example, the terminal device in FIG. 8 may alternatively be a chip, a chip system, or a processor that supports the terminal device in implementing the method. Alternatively, the first node or the second node in FIG. 8 may be a chip, a chip system, or a processor that supports the first node or the second node in implementing the method. It may be understood that the first node and the second node are access network devices in the MR-DC scenario.

The method 800 shown in FIG. 8 includes 810 to 840. According to the method, a throughput of a split bearer can be obtained.

810: The first node sends configuration information of throughput measurement to the second node.

Correspondingly, the second node receives the configuration information.

The first node may be a master node, and the second node is a secondary node; or the first node is a secondary node, and the second node is a master node.

The configuration information includes a measurement periodicity length. The measurement periodicity indicates a time length for performing throughput measurement between the terminal device and the first node or between the terminal device and the second node.

In a possible implementation, the configuration information includes start time information and end time information for performing throughput measurement between the terminal device and the first node or between the terminal device and the second node. Based on the start time information and the end time information, the time length for performing throughput measurement between the terminal device and the first node or between the terminal device and the second node may also be obtained.

In another possible implementation, the configuration information includes the measurement periodicity length and a time node, and the time node may be one of the start time information and the end time information. For example, an end time of the throughput measurement may be obtained based on the periodicity length and the start time information, or a start time of the throughput measurement may be obtained based on the periodicity length and the end time information.

In another possible implementation, the configuration information includes a measurement periodicity, and the start time information and the end time information of the throughput measurement.

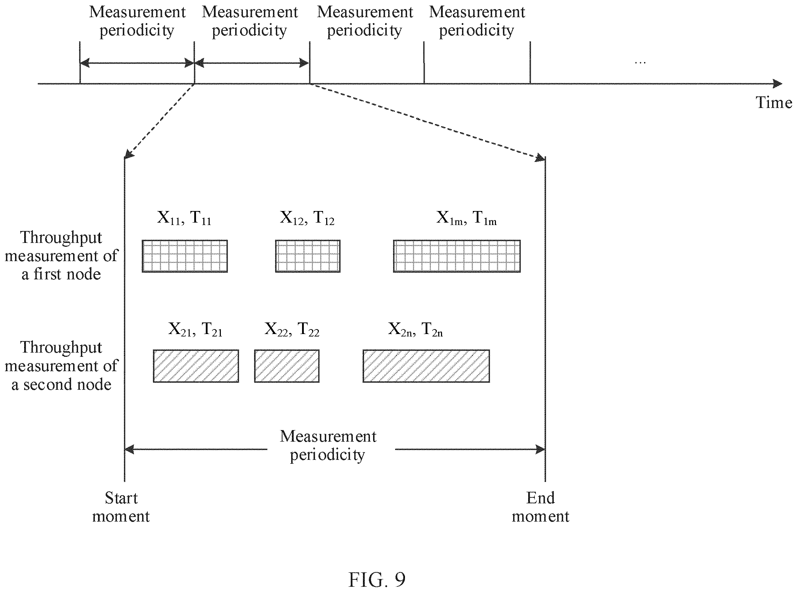

The first node or the second node may periodically perform the throughput measurement based on the configuration information. For details, refer to FIG. 9.

In a possible implementation, the configuration information includes at least two measurement periodicities, time domain lengths in the at least two measurement periodicities are different, and the first node or the second node may perform throughput measurement in each measurement periodicity based on the at least two measurement periodicities. According to the method, the first node or the second node can flexibly perform throughput measurement, to ensure diversity of throughput measurement processes.

820: The first node and the second node perform throughput measurement.

For example, the first node collects statistics on a throughput measurement value between the first node and the terminal device, and the second node collects statistics on a throughput measurement value between the second node and the terminal device.

In a possible implementation, the throughput measurement between the first node and the terminal device and between the second node and the terminal device in one measurement periodicity may be statistics collection of throughput measurement in a plurality of time periods in the measurement periodicity. For details, refer to FIG. 9.

FIG. 9 shows a method for measuring a throughput between the first node and the terminal device and between the second node and the terminal device according to this embodiment of this application. Specifically, in a measurement periodicity, it is assumed that m times of transmission are performed between the first node and the terminal device, data volumes in the m times of transmission are respectively $X_{11}$, $X_{12}$, ..., and $X_{1m}$, and transmission time lengths in the m times of transmission are respectively $T_{11}$, $T_{12}$, ..., and $T_{1m}$. It is denoted as throughput statistics information of the first node. n times of transmission are performed between the second node and the terminal device in the measurement periodicity, data volumes in the n times of transmission are $X_{21}$, $X_{22}$, ..., and $X_{2n}$, and transmission time lengths in the n times of transmission are $T_{21}$, $T_{22}$, ..., and $T_{2n}$. It is denoted as throughput statistics information of the second node. m and n are integers greater than or equal to 1, and values of m and n may be the same or different. The throughput statistics information may include data volume information in the measurement periodicity, or may include data volume information and effective transmission time information in the measurement periodicity. It may be understood that the throughput statistics information of the first node and the throughput statistics information of the second node are merely descriptive names, and do not limit the foregoing execution steps. This is not limited in embodiments of this application. Any other name that can describe the foregoing throughput statistics information is applicable.

Optionally, in a throughput measurement process between the first node and the terminal device and between the second node and the terminal device, a start moment and an end moment of each time of transmission in the m times of transmission may be aligned with or may not be aligned with a start moment and an end moment of each time of transmission in the n times of transmission. Each transmission duration in the m times of transmission may be the same as or may be different from each transmission duration in the n times of transmission. According to the method, flexibility of throughput measurement between the first node and the terminal device and between the second node and the terminal device is ensured.

830: Calculate a throughput of the split bearer in each measurement periodicity.

In a possible implementation, the first node receives the throughput statistics information from the second node, and calculates the throughput of the split bearer in each periodicity based on the throughput statistics information of the first node and the throughput statistics information of the second node.

In another possible implementation, the first node sends the throughput statistics information of the first node and the throughput statistics information of the second node to the core network device, and the core network device calculates the throughput of the split bearer in each periodicity.

In another possible implementation, the core network device receives the throughput statistics information of the first node from the first node and the throughput statistics information of the second node from the second node, and then calculates the throughput of the split bearer in each periodicity.

The throughput of the split bearer is calculated in the following method:

$$X_{\text{split\_bearer}} = (X_{11}+X_{12}+...+X_{1m}+X_{21}+X_{22}+...+X_{2n})/T_{\text{all}} \quad (1)$$

$T_{\text{all}}$ is determined based on $T_{11}$, $T_{12}$, ..., and $T_{1m}$, and $T_{21}$, $T_{22}$, ..., and $T_{2n}$, and $T_{\text{all}}$ is calculated in one of the following manners:

$$T_{\text{all}} = \max (T_{11}+T_{12}+...+T_{1m}, T_{21}+T_{22}+...+T_{2n}) \quad (2a)$$

$$T_{\text{all}} = T_{11}+T_{12}+...+T_{1m} \quad (2b)$$

$$T_{\text{all}} = T_{21}+T_{22}+...+T_{2n} \quad (2c)$$

$$T_{\text{all}} = (T_{11}+T_{12}+...+T_{1m}+T_{21}+T_{22}+...+T_{2n})/2 \quad (2d)$$

$$T_{\text{all}} = T_{\text{measurement periodicity}} \quad (2e)$$

Formula (2e) indicates that, in a possible measurement manner, a value of $T_{all}$ is a value of the measurement periodicity.

It may be understood that the throughput of the split bearer is a measurement quantity in one measurement periodicity. When there are a plurality of measurement periodicities, throughputs of a plurality of split bearers may be obtained according to the foregoing throughput determining method. In other words, each measurement periodicity corresponds to a throughput of one split bearer.

840: The first node sends stop information to the second node, and the first node and the second node stop the throughput measurement.

When the first node and the second node complete the throughput measurement in the K measurement periodicities, the first node sends the stop information to the second node, and the first node and the second node stop the throughput measurement, where K is an integer greater than or equal to 1, and K may be a parameter carried in the configuration information of the throughput measurement, or may be preset and separately stored in the first node and the second node.

In another possible implementation of the fourth aspect, when no data is transmitted between the first node/second node and the terminal device in K consecutive measurement periodicities, the first node sends the stop information to the second node, and the first node and the second node stop the throughput measurement.

In the foregoing throughput calculation method 800, step 810 may be optional. To be specific, the first node may not need to send the configuration information of the throughput measurement to the second node, and the configuration information of the throughput measurement may be preset by the first node and the second node and stored in the first node and the second node respectively.

In the foregoing throughput calculation method 800, step 840 may be optional. To be specific, the stop information may not be sent to the second node by the first node. For example, the first node and the second node stop the throughput measurement after completing the throughput measurement of the K measurement periodicities. Alternatively, when no data is transmitted between the first node/second node and the terminal device in K consecutive measurement periodicities, the first node and the second node stop the throughput measurement. K is an integer greater than or equal to 1, and K may be a parameter carried in the configuration information of the throughput measurement, or may be preset and separately stored in the first node and the second node.

It may be understood that the foregoing throughput calculation method 800 does not limit a data transmission direction. To be specific, the foregoing throughput calculation method 800 is applicable to both an uplink data transmission scenario and a downlink data transmission scenario.

According to the foregoing throughput calculation method 800, the throughput of the split bearer can be obtained, and further, performance of the communication system is measured by using the throughput.

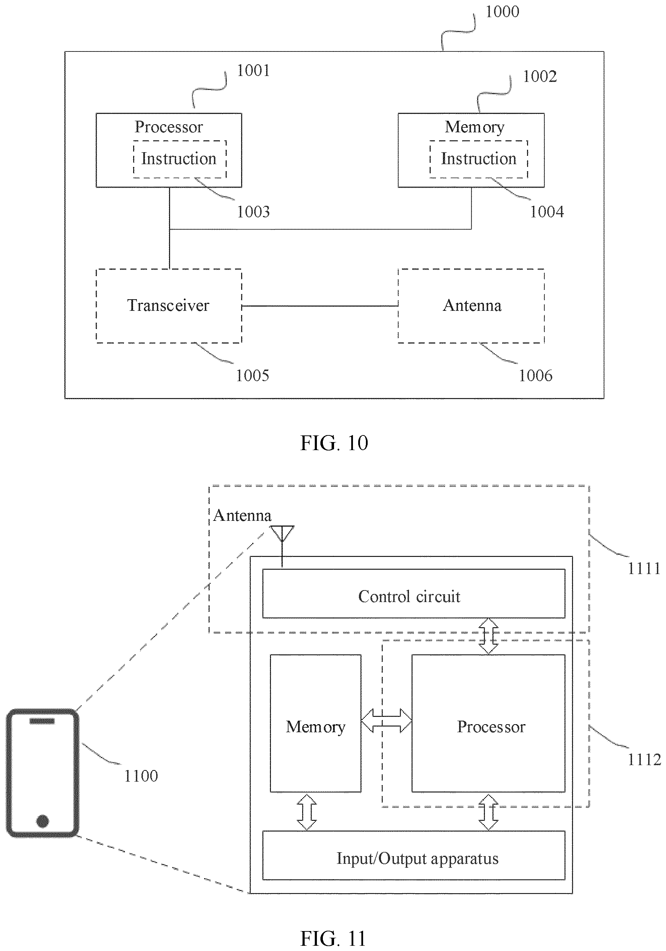

FIG. 10 is a schematic diagram of a structure of an apparatus. The apparatus 1000 may be an access network device, a core network device, or a terminal device; or a chip, a chip system, a processor, or the like that supports the access network device in implementing the foregoing method; or a chip, a chip system, a processor, or the like that supports the core network device in implementing the foregoing method; or a chip, a chip system, a processor, or the like that supports the terminal device in implementing the foregoing method. The apparatus may be configured to implement the method described in the foregoing method embodiments. For details, refer to the description in the foregoing method embodiments.

The apparatus 1000 may include one or more processors 1001. The processor 1001 may also be referred to as a processing unit, and may implement a specific control function. The processor 1001 may be a general-purpose processor, a dedicated processor, or the like. For example, the processor may be a baseband processor or a central processing unit. The baseband processor may be configured to process a communication protocol and communication data, and the central processing unit may be configured to control a communication apparatus (for example, a base station, a baseband chip, a terminal device, a terminal device chip, a DU, or a CU), execute software programs, and process data of software programs.

In an optional design, the processor 1001 may alternatively store instructions and/or data 1003, and the instructions and/or data 1003 may be run by the processor, so that the apparatus 1000 performs the method described in the foregoing method embodiments.

In another optional design, the processor 1001 may include a transceiver unit configured to implement sending and receiving functions. For example, the transceiver unit may be a transceiver circuit, an interface, or an interface circuit. Transceiver circuits, interfaces, or interface circuits that are configured to implement receiving and sending functions may be separated, or may be integrated together. The transceiver circuit, the interface, or the interface circuit may be configured to read or write code/data, or the transceiver circuit, the interface, or the interface circuit may be configured to transmit or transfer a signal.

In still another possible design, the apparatus 1000 may include a circuit. The circuit may implement a sending, receiving, or communication function in the foregoing method embodiments.

Optionally, the apparatus 1000 may include one or more memories 1002. The memory 1002 may store instructions 1004, and the instructions may be run on the processor, so that the apparatus 1000 performs the method described in the foregoing method embodiments. Optionally, the memory may further store data. Optionally, the processor may alternatively store instructions and/or data. The processor and the memory may be separately disposed, or may be integrated together. For example, the correspondence described in the foregoing method embodiments may be stored in the memory or stored in the processor.

Optionally, the apparatus 1000 may further include a transceiver 1005 and/or an antenna 1006. The processor 1001 may be referred to as a processing unit, and controls the apparatus 1000. The transceiver 1005 may be referred to as a transceiver unit, a transceiver machine, a transceiver circuit, a transceiver apparatus, a transceiver module, or the like, and is configured to implement a transceiver function.

Optionally, the apparatus 1000 in this embodiment of this application may be configured to perform the method described in FIG. 4, FIG. 5, FIG. 6, FIG. 8, or FIG. 9 in embodiments of this application. The processor and the transceiver described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver each may be manufactured by using various IC processing technologies, for example, a complementary metal oxide semiconductor (complementary metal oxide semiconductor, CMOS), an N-channel metal oxide semiconductor (N-channel metal oxide semiconductor, NMOS), a p-channel metal oxide semiconductor (p-channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be an access network device, a core network device, or a terminal device. However, a scope of the apparatus described in this application is not limited thereto, and a structure of the apparatus may not be limited to FIG. 10. The apparatus may be a stand-alone device or may be part of a larger device. For example, the apparatus may be:

(1) an independent integrated circuit IC, a chip, a chip system, or a subsystem of a chip system;
(2) a set having one or more ICs, where optionally, the IC set may also include a storage component configured to store data and/or instructions;
(3) an ASIC, for example, a modem (MSM);
(4) a module that can be embedded in another device;
(5) a receiver, a terminal device, an intelligent terminal device, a cellular phone, a wireless device, a handset, a mobile unit, a vehicle-mounted device, an access network device, a core network device, a cloud device, an artificial intelligence device, a machine device, a home device, a medical device, an industrial device, or the like; or
(6) others.

FIG. 11 is a schematic diagram of a structure of a terminal device. The terminal device is applicable to the scenarios shown in FIG. 1, FIG. 2, and FIG. 3. For ease of description, FIG. 11 shows only main components of the terminal device. As shown in FIG. 11, the terminal device 1100 includes a processor, a memory, a control circuit, an antenna, and an input/output apparatus. The processor is mainly configured to: process a communication protocol and communication data, control the entire terminal device, execute a software program, and process data of the software program. The memory is mainly configured to store a software program and data. The radio frequency circuit is mainly configured to convert a baseband signal and a radio frequency signal and process the radio frequency signal. The antenna is mainly configured to receive and send the radio frequency signal in the form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent wirelessly, the processor performs baseband processing on the to-be-sent data, and outputs a baseband signal to the radio frequency circuit. The radio frequency circuit processes the baseband signal to obtain a radio frequency signal, and sends the radio frequency signal to the outside through an antenna in the form of an electromagnetic wave. When data is sent to the terminal device, the radio frequency circuit receives a radio frequency signal through the antenna. The radio frequency signal is further converted into a baseband signal, and the baseband signal is output to the processor. The processor converts the baseband signal into data and processes the data.

For ease of description, FIG. 11 shows only one memory and one processor. In an actual terminal device, there may be a plurality of processors and memories. The memory may also be referred to as a storage medium, a storage device, or the like. This is not limited in embodiments of the present invention. In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units, to enhance processing capabilities of the terminal device, and components of the terminal device may be connected by using various buses. The baseband processor may also be expressed as a baseband processing circuit or a baseband processing chip. The central processing unit may alternatively be expressed as a central processing circuit or a central processing chip. A function of processing a communication protocol and communication data may be built in the processor; or may be stored in the storage unit in the form of a software program, and the processor executes the software program to implement a baseband processing function.

In an example, the antenna and the control circuit having a transceiver function may be considered as a transceiver unit 1111 of the terminal device 1100, and the processor having a processing function may be considered as a processing unit 1112 of the terminal device 1100. As shown in FIG. 11, the terminal device 1100 includes the transceiver unit 1111 and the processing unit 1112. The transceiver unit may also be referred to as a transceiver machine, a transceiver, a transceiver apparatus, or the like. Optionally, a component that is in the transceiver unit 1111 and that is configured to implement the receiving function may be considered as a receiving unit, and a component that is in the transceiver unit 1111 and that is configured to implement a sending function may be considered as a sending unit. In other words, the transceiver unit 1111 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like. Optionally, the receiving unit and the sending unit may be an integrated unit, or may be a plurality of independent units. The receiving unit and the sending unit may be located in one geographical location, or may be distributed in a plurality of geographical locations.

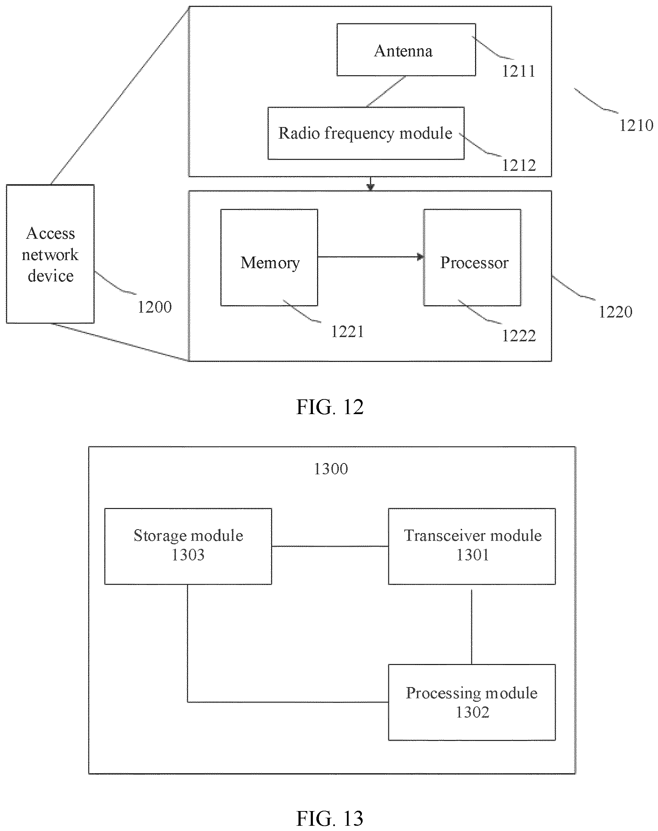

FIG. 12 is a schematic diagram of a structure of an access network device. The access network device is applicable to the scenario shown in FIG. 1, FIG. 2, or FIG. 3. For ease of description, FIG. 12 shows only main components of the access network device. As shown in FIG. 12, a base station device includes a processor, a memory, a radio frequency module, and an antenna. The processor is mainly configured to: process a communication protocol and communication data, control the entire terminal device, execute a software program, and process data of the software program. The memory is mainly configured to store a software program and data. The radio frequency module is mainly configured to convert a baseband signal and a radio frequency signal and process the radio frequency signal. The antenna is mainly configured to receive and send the radio frequency signal in the form of an electromagnetic wave.

For ease of description, FIG. 12 shows only one memory and one processor. In an actual terminal device, there may be a plurality of processors and memories. The memory may also be referred to as a storage medium, a storage device, or the like. This is not limited in embodiments of the present invention.

In an example, the antenna and the radio frequency module having a transceiver function may be considered as a transceiver unit 1210 of the access network device 1200, and the processor and the memory having a processing function may be considered as a processing unit 1220 of the access network device 1200. As shown in FIG. 12, the access network device 1200 includes a transceiver unit 1210 and a processing unit 1220. The transceiver unit may also be referred to as a transceiver machine, a transceiver, a transceiver apparatus, or the like. Optionally, a component that is in the transceiver unit 1210 and that is configured to implement the receiving function may be considered as a receiving unit, and a component that is in the transceiver unit 1210 and that is configured to implement a sending function may be considered as a sending unit. In other words, the transceiver unit 1210 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like. Optionally, the receiving unit and the sending unit may be an integrated unit, or may be a plurality of independent units. The receiving unit and the sending unit may be located in one geographical location, or may be distributed in a plurality of geographical locations. The processing unit 1220 is mainly configured to perform baseband processing, control the access network device, and the like, and is a control center of the access network device. The processing unit 1220 may be formed by one or more boards. The plurality of boards may jointly support a radio access network (for example, a 5G network) with a single access indication, or may separately support radio access networks (for example, an LTE network, a 5G network, or another network) of different access standards. The memory 1221 and the processor 1222 may serve one or more boards. In other words, a memory and a processor may be disposed on each board. Alternatively, a plurality of boards may share a same memory and a same processor. In addition, a necessary circuit may be further disposed on each board.

As shown in FIG. 13, another embodiment of this application provides an apparatus 1300. The apparatus may be a terminal device; or may be a component (for example, an integrated circuit or a chip) of a terminal device. Alternatively, the apparatus may be a core network device, or may be a component (for example, an integrated circuit or a chip) of a core network device. Alternatively, the apparatus may be an access network device, or may be a component (for example, an integrated circuit or a chip) of an access network device. Alternatively, the apparatus may be another communication module, and is configured to implement the method in the method embodiments of this application. The apparatus 1300 may include a processing module 1302 (or referred to as a processing unit). Optionally, the apparatus may further include a transceiver module 13001 (or referred to as a transceiver unit) and a storage module 1303 (or referred to as a storage unit).

In a possible design, one or more modules in FIG. 13 may be implemented by one or more processors, or implemented by one or more processors and memories; or implemented by one or more processors and transceivers; or implemented by one or more processors, memories, and transceivers. This is not limited in embodiments of this application. The processor, the memory, and the transceiver may be separately disposed, or may be integrated.

The apparatus has a function of implementing the terminal device described in embodiments of this application. For example, the apparatus includes a corresponding module, unit, or means (means) used by the terminal device to perform the terminal device-related steps described in embodiments of this application. The function, unit, or means (means) may be implemented by software, or implemented by hardware, or may be implemented by hardware executing corresponding software, or may be implemented by combining software and hardware. For details, refer to the corresponding description in the foregoing corresponding method embodiments. Alternatively, the apparatus has a function of implementing the access network device described in embodiments of this application. For example, the apparatus includes a corresponding module, unit, or means (means) used by the access network device to perform the access network device-related steps described in embodiments of this application. The function, unit, or means (means) may be implemented by software, or implemented by hardware, or may be implemented by hardware executing corresponding software, or may be implemented by combining software and hardware. For details, refer to the corresponding description in the foregoing corresponding method embodiments. Alternatively, the apparatus has a function of implementing the core network device described in embodiments of this application. For example, the apparatus includes a corresponding module, unit, or means (means) used by the core network device to perform the core network device-related steps described in embodiments of this application. The function, unit, or means (means) may be implemented by software, or implemented by hardware, or may be implemented by hardware executing corresponding software, or may be implemented by combining software and hardware. For details, refer to the corresponding description in the foregoing corresponding method embodiments.

Optionally, the modules in the apparatus 1300 in this embodiment of this application may be configured to perform the method described in FIG. 4, FIG. 5, FIG. 6, FIG. 8, or FIG. 9 in embodiments of this application.

In a possible design, an apparatus 1300 may include: a processing module 1302 and a transceiver module 1301. The transceiver module 1301 is configured to receive first PLMN information of a first cell from a first access network device and second PLMN information of a second cell from a second access network device. The processing module 1302 is configured to determine, based on the first PLMN information and the second PLMN information, whether to send first information to the first access network device, where the first information includes a PLMN list, and the PLMN list includes a PLMN set that allows a terminal device to perform minimization of drive test MDT. The transceiver module 1301 is further configured to send the first information to the first access network device.

The apparatus can determine whether the first information needs to be sent to the first access device, to ensure continuity of MDT measurement.

In a possible design, an apparatus 1300 may include: a processing module 1302 and a transceiver module 1301. The transceiver module 1301 is configured to receive a first request of a first cell from a first access network device, where the first request is for requesting a PLMN list for performing minimization of drive test MDT. The processing module 1302 is configured to determine, based on first PLMN information of the first cell, whether to send first information to the first access network device, where the first information includes a PLMN list. The transceiver module 1301 is further configured to send the first information to the first access network device.

The apparatus can send the first information to the first access device in time, to ensure continuity of MDT measurement.

In a possible design, an apparatus 1300 may include: a storage module 1303, a processing module 1302, and a transceiver module 1301. The transceiver module 1301 is configured to receive first information from a core network device, where the first information includes a PLMN list, and the PLMN list includes a PLMN set that allows a terminal device to perform minimization of drive test MDT. The storage module 1303 is configured to store the first information. The transceiver module 1301 is further configured to receive first PLMN information of a first cell of a first access network device. The processing module 1302 is configured to determine, based on the first PLMN information of the first cell, whether to send the first information to the first access network device. The transceiver module 1301 is further configured to send the first information to the first access network device.

The apparatus can send the first information to the first access device in time, to reduce signaling interaction and ensure continuity of MDT measurement.

In a possible design, an apparatus 1300 may include: a processing module 1302 and a transceiver module 1301. The transceiver module 1301 is configured to send first PLMN information of a first cell or second PLMN information of a second cell. The transceiver module 1301 may be further configured to send a first request, where the first request is for requesting a PLMN list for performing minimization of drive test MDT. The processing module 1302 is configured to receive first information, where the first information includes the PLMN list.

The apparatus can send request information to a core network device in time, to obtain MDT configuration information in time, thereby ensuring continuity of MDT measurement.

In a possible design, an apparatus 1300 may include: a processing module 1302 and a transceiver module 1301. The transceiver module 1301 is configured to send configuration information of throughput measurement to a second node. The transceiver module 1301 is further configured to receive throughput statistics information of the second node. The processing module 1302 is configured to determine a throughput in a measurement periodicity based on throughput statistics information of a first node and the throughput statistics information of the second node. The transceiver module 1301 is further configured to send stop information to the second node, where the stop information indicates to end the throughput measurement.

In a possible design, an apparatus 1300 may include a processing module 1302 and a transceiver module 1301. The transceiver module 1301 is configured to receive configuration information of throughput measurement sent by a first node. The processing module 1302 is configured to collect throughput statistics information in a measurement periodicity based on the configuration information of the throughput measurement. The transceiver module 1301 sends the throughput statistics information of the node. The transceiver module 1301 is further configured to receive stop information sent by the first node, where the stop information indicates to end the throughput measurement.

The apparatus can obtain a throughput of a split bearer, and therefore measure performance of a communication system through the throughput.

An embodiment of this application further provides a communication system. For example, the communication system may include a core network device. Optionally, the system may further include an access network device. The access network device and the core network device may communicate with each other. For example, the access network device may send, to the core network device, PLMN information of a cell corresponding to the access network device. Optionally, the communication system may further include a terminal device. The terminal device and the access device may communicate with each other. For example, the terminal device receives the PLMN information that is of the cell corresponding to the access network device and that is sent by the access network device. Optionally, the communication system may further include another network element. The network element may be included in the core network device, the access network device, or the terminal device, or may be independent of the core network device, the access network device, or the terminal device.

It may be understood that the foregoing description merely indicates that the communication apparatus performs some embodiments in embodiments of this application. The apparatus provided in embodiments of this application may alternatively implement other embodiments in embodiments of this application. Details are not described herein again.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features as required. Correspondingly, the apparatus provided in this embodiment of this application may also correspondingly implement these features or functions. Details are not described herein again. A person skilled in the art may further understand that various illustrative logical blocks (illustrative logical block) and steps (steps) listed in embodiments of this application may be implemented by using electronic hardware, computer software, or a combination thereof. Whether the functions are implemented by using hardware or software depends on particular applications and a design requirement of the entire system. A person skilled in the art may implement the functions by using various methods for a corresponding application. However, it should not be understood that the implementation goes beyond the protection scope of embodiments of this application.

It may be understood that, the processor in embodiments of this application may be an integrated circuit chip, and has a signal processing capability. In an implementation process, steps in the foregoing method embodiments can be implemented by using a hardware integrated logical circuit in the processor, or by using instructions in the form of software. The processor may be a general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component.

The solutions described in this application may be implemented in various manners. For example, these technologies may be implemented in hardware, software, or a combination of hardware and software. For hardware implementation, a processing unit configured to perform such technologies in a communication apparatus (for example, a base station, a terminal device, a network entity, or a chip) may be implemented in one or more general-purpose processors, DSPs, digital signal processing devices, ASICs, programmable logic devices, FPGAs or other programmable logic apparatuses, discrete gate or transistor logic, discrete hardware components, or any combination thereof. The general-purpose processor may be a microprocessor. Optionally, the general-purpose processor may alternatively be any conventional processor, controller, microcontroller, or state machine. The processor may alternatively be implemented through a combination of computing apparatuses, such as a digital signal processor and a microprocessor, a plurality of microprocessors, one or more microprocessors and one digital signal processor core, or any other similar configurations.

It may be understood that, the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium, storing a computer program. When the computer program is executed by a computer, a function of any one of the foregoing method embodiments is implemented.

This application further provides a computer program product. When the computer program product is executed by a computer, a function of any one of the foregoing method embodiments is implemented.

All or a part of the foregoing embodiments may be implemented by software, hardware, firmware, or any combination thereof. When software is used to implement the embodiments, all or a part of the embodiments may be implemented in the form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

It may be understood that, an "embodiment" described in this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined according to functions and internal logic of the processes, and shall not constitute any limitation on the implementation processes of embodiments of this application.

It may be understood that in this application, both "when" and "if" refer to corresponding processing performed by the apparatus in an objective case, are not intended to limit a time, are not required to perform a determining action during implementation of the apparatus, and do not imply that there is any other limitation.

In this application, "at the same time" may be understood as being at a same time point, may be understood as being in a period of time, or may be understood as being in a same periodicity.

A person skilled in the art may understand that: The first number, the second number, and the like in this application are merely distinguished for ease of description, and are not intended to limit the scope of embodiments of this application. A specific value of a number (or referred to as an index), a specific value of a quantity, and a location in this application are merely used for illustration purposes, are not unique representation forms, and are not intended to limit the scope of embodiments of this application. The first number, the second number, and the like in this application are merely distinguished for ease of description, and are not intended to limit the scope of embodiments of this application.

An element represented by a singular number in this application is intended to represent "one or more", but not "only one", unless otherwise specified. In this application, unless otherwise specified, "at least one" is intended to represent "one or more", and "a plurality of" is intended to represent "two or more".

In addition, the terms "system" and "network" may be used interchangeably in this specification. The term "and/or" in this specification is merely an association relationship for describing associated objects, and indicates that three relationships may exist. For example, A and/or B may indicate: Only A exists, both A and B exist, and only B exists, where A may be a singular number or a plural number, and B may be a singular number or a plural number. A character "/" generally indicates an "or" relationship between the associated objects.

In this specification, the term "at least one of" or "at least one type of" means all or any combination of the listed items, for example, "at least one of A, B, and C" may indicate: Only A exists, only B exists, only C exists, both A and B exist, both B and C exist, and A, B, and C all exist, where A may be a singular number or a plural number, B may be a singular number or a plural number, and C may be a singular number or a plural number.

It may be understood that, in embodiments of this application, "B corresponding to A" indicates that B is associated with A, and B may be determined based on A. However, it should be further understood that determining A based on B does not mean that B is determined based on A only; that is, B may also be determined based on A and/or other information.

Correspondences shown in tables in this application may be configured, or may be predefined. Values of information in each table are merely examples, and may be configured as other values. This is not limited in this application. When a correspondence between first configuration information and parameters is configured, not all the correspondences shown in the tables need to be configured. For example, in the table in this application, correspondences shown in some rows may not be configured. For another example, proper deformation adjustment, for example, splitting, merging, and the like, may be performed based on the foregoing table. Names of the parameters indicated by the headings in the foregoing tables may alternatively use other names that can be understood by the communication apparatus, and values or representation manners of the parameters may alternatively use other values or representation manners that can be understood by the communication apparatus. During implementation of the foregoing tables, another data structure, such as an array, a queue, a container, a stack, a linear table, a pointer, a linked list, a tree, a graph, a structure, a class, a pile, a hash list, or a hash table, may alternatively be used.

Predefinition in this application may be understood as definition, pre-definition, storage, pre-store, pre-negotiation, pre-configuration, solidification, or pre-burning.

A person of ordinary skill in the art may understand that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

A person of ordinary skill in the art may understand that, for the purpose of convenient and brief description, for a detailed working process of the foregoing system, apparatus, and unit, refer to a corresponding process in the foregoing method embodiments, and details are not described herein again.

It may be understood that the system, the apparatus, and the method described in this application may alternatively be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, each functional unit in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, reference may be made to each other. In each embodiment and each implementation/implementation method/implementation method in each embodiment of this application, unless otherwise specified or logically conflicted, terms and/or descriptions of different embodiments and implementations/implementation methods/implementation methods in embodiments are consistent and may be referenced by each other. Technical features in different embodiments and implementations/implementation methods/implementation methods in embodiments may be combined to form a new embodiment, implementation, implementation method, or implementation method according to an internal logical relationship of the technical features. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. An information transmission method, applied to a first entity and comprising:

    obtaining first public land mobile network PLMN information of a first cell;
    determining, based on the first PLMN information, to send first information to a first access network device, wherein the first access network device is an access network device corresponding to the first cell, the first information comprises a PLMN list, and the PLMN list comprises a PLMN set that allows a terminal device to perform a first operation; and
    sending the first information to the first access network device.

2. The method according to claim 1, wherein the first entity is a core network device, or the first entity belongs to a core network device.

3. The method according to claim 2, wherein the obtaining first public land mobile network PLMN information of a first cell comprises:
    receiving the first PLMN information of the first cell from the first access network device, or determining the first PLMN information of the first cell based on a global identifier of the first cell.

4. The method according to claim 2 or 3, wherein the determining, based on the first PLMN information, to send first information to a first access network device comprises:
    determining, when the first PLMN information belongs to the PLMN list and second PLMN information of a second cell does not belong to the PLMN list, to send the first information to the first access network device, wherein the second cell is a cell in which the terminal device is located before being last handed over to the first cell.

5. The method according to claim 5, wherein an access network device corresponding to the second cell is a second access network device, or an access network device corresponding to the second cell is the first access network device.

6. The method according to claim 2 or 3, wherein the determining, based on the first PLMN information, to send first information to a first access network device comprises:
    determining, when the first PLMN information belongs to the PLMN list, to send the first information to the first access network device.

7. The method according to claim 6, wherein before the determining, based on the first PLMN information, to send first information to a first access network device, the method further comprises:
    receiving a first request from the first access network device, wherein the first request is for requesting the first information.

8. The method according to claim 1, wherein the first entity is the terminal device or the first entity belongs to the terminal device, and before the obtaining first public land mobile network PLMN information of a first cell, the method further comprises:
    receiving and storing the first information.

9. The method according to claim 8, wherein the obtaining first public land mobile network PLMN information of a first cell comprises:

receiving the first PLMN information of the first cell from the first access network device.

10. The method according to claim 8 or 9, wherein the determining, based on the first PLMN information, to send first information to a first access network device comprises:
determining, when the first PLMN information belongs to the PLMN list, to send the stored first information to the first access network device.

11. The method according to any one of claims 1 to 10, wherein the first information further comprises serving PLMN information, and the serving PLMN information is a PLMN bound when the first operation is performed before the handover to the first cell.

12. The method according to any one of claims 1 to 11, wherein the first operation is minimization of drive test MDT measurement or quality of experience QoE measurement.

13. An information transmission method, comprising:

sending, by a first access network device, a first request, wherein the first request indicates that the first access network device requests first information for performing a first operation in a first cell; and
receiving the first information, wherein the first information comprises a PLMN list, and the PLMN list indicates configuration information that is of the first operation and that is to be sent by the first access network device to a terminal device.

14. The method according to claim 13, wherein the first information further comprises serving PLMN information, and the serving PLMN information is a PLMN bound when the first operation is performed before the handover to the first cell.

15. The method according to any one of claims 13 to 14, wherein the first operation is minimization of drive test MDT measurement or quality of experience QoE measurement.

16. A communication apparatus, wherein the apparatus comprises at least one unit configured to perform the method according to any one of claims 1 to 12.

17. A communication apparatus, comprising a processor and a memory, wherein the processor is coupled to the memory, and the processor is configured to perform the method according to any one of claims 1 to 12.

18. A communication apparatus, wherein the apparatus is configured to perform the method according to any one of claims 13 to 15.

19. A communication apparatus, comprising a processor and a memory, wherein the processor is coupled to the memory, and the processor is configured to perform the method according to any one of claims 13 to 15.

20. A computer-readable storage medium, storing a computer program or instructions, wherein when the computer program or the instructions are executed, a computer is enabled to perform the method according to any one of claims 1 to 12, or the computer is enabled to perform the method according to any one of claims 13 to 15.

21. A computer program product, wherein the computer program product comprises computer program code, and when the computer program code is run on a computer, the computer is enabled to implement the method according to any one of claims 1 to 12 or implement the method according to any one of claims 13 to 15.

22. A chip, comprising a processor, wherein the processor is coupled to a memory, the memory is configured to store a program or instructions, and when the program or the instructions are executed by the processor, the apparatus is enabled to perform the method according to any one of claims 1 to 12 or the method according to any one of claims 13 to 15.

FIG. 1

FIG. 2

FIG. 3A

FIG. 3B

Access network device corresponding to a second cell | Access network device corresponding to a first cell | Core network device

Second PLMN of the second cell

A terminal device performs a cell handover

First PLMN of the first cell

S410: Obtain the first PLMN of the first cell

S430: Send first information including a PLMN list

S420: The first PLMN is in the PLMN list

FIG. 4

Access network device corresponding to a second cell | Access network device corresponding to a first cell | Core network device

A terminal device performs a cell handover

First request, where the first request carries a first PLMN

S510: Obtain the first request, where the first request carries the first PLMN

S530: Send first information including a PLMN list

S520: The first PLMN is in the PLMN list

FIG. 5

| Terminal device | Access network device corresponding to a first cell | Core network device |
|---|---|---|

S610: Receive and store configuration information

Send configuration information including a PLMN list

The terminal device performs a cell handover

S620: Obtain the first PLMN corresponding to the first cell

First PLMN

S630: The first PLMN is in the PLMN list

S640: Send first information including the PLMN list

FIG. 6

EPC

S1

S1-U

X2

eNB

gNB

**A**

5GC

NG

NG-U

Xn

gNB

LTE eNB

**B**

5GC

NG

NG-U

Xn

LTE eNB

gNB

**C**

5GC

NG

NG-U

Xn

gNB

gNB

**D**

FIG. 7

FIG. 8

FIG. 9

1000

1001

Processor

Instruction

1003

1002

Memory

Instruction

1004

Transceiver

1005

Antenna

1006

FIG. 10

Antenna

Control circuit

1111

Memory

Processor

1112

1100

Input/Output apparatus

FIG. 11

Antenna

1211

Radio frequency module

1212

1210

Access network device

1200

Memory

1221

Processor

1222

1220

FIG. 12

1300

Storage module
1303

Transceiver module
1301

Processing module
1302

FIG. 13

## INTERNATIONAL SEARCH REPORT

| | International application No. |
|---|---|
| | **PCT/CN2022/084111** |

| A. | CLASSIFICATION OF SUBJECT MATTER |
|---|---|

H04W 36/00(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; WPABS; VEN; EPTXT; USTXT; WOTXT; JPTXT; KRTXT; 3GPP: 允许, 公共陆地移动网, 漫游, 最小化路测, 小区, 切换, 获得, 发送, 列表, 集合, 等效, 等同, 属于, 包含, permit, PLMN, public land mobile network, roam+, MDT, Minimization of Drive Test, cell, switch, get, send+, list, set, equivalent, belong, include

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 103200603 A (BEIJING SAMSUNG COMMUNICATION TECHNOLOGY RESEARCH CO., LTD.) 10 July 2013 (2013-07-10) description, paragraphs 31-120 | 1-22 |
| A | WO 2018022377 A1 (QUALCOMM INCORPORATED) 01 February 2018 (2018-02-01) entire document | 1-22 |
| A | CN 103369500 A (CHINA ACADEMY OF TELECOMMUNICATIONS TECHNOLOGY) 23 October 2013 (2013-10-23) entire document | 1-22 |
| A | US 2018124666 A1 (SAMSUNG ELECTRONICS CO., LTD.) 03 May 2018 (2018-05-03) entire document | 1-22 |
| A | SAMSUNG. "R3-112848 MDT Support in the equivalent PLMN" *3GPP-TSG-RAN WG3 #74*, 05 November 2011 (2011-11-05), entire document | 1-22 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 May 2022** | **02 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/084111**

| Patent document cited in search report | | | Publication date (day/month/year) | Patent family member(s) | | | Publication date (day/month/year) |
|---|---|---|---|---|---|---|---|
| CN | 103200603 | A | 10 July 2013 | WO | 2013103271 | A1 | 11 July 2013 |
| | | | | CN | 108601038 | A | 28 September 2018 |
| | | | | US | 2013178211 | A1 | 11 July 2013 |
| | | | | CN | 103200603 | B | 10 July 2018 |
| WO | 2018022377 | A1 | 01 February 2018 | IN | 201641026006 | A | 02 February 2018 |
| CN | 103369500 | A | 23 October 2013 | WO | 2013152715 | A1 | 17 October 2013 |
| | | | | CN | 103369500 | B | 08 February 2017 |
| US | 2018124666 | A1 | 03 May 2018 | WO | 2012138141 | A2 | 11 October 2012 |
| | | | | US | 2012258766 | A1 | 11 October 2012 |
| | | | | US | 2019069207 | A1 | 28 February 2019 |
| | | | | AU | 2012240732 | A1 | 10 October 2013 |
| | | | | EP | 2509347 | A2 | 10 October 2012 |
| | | | | KR | 20120113689 | A | 15 October 2012 |
| | | | | JP | 2014510503 | A | 24 April 2014 |
| | | | | ES | 2823251 | T3 | 06 May 2021 |
| | | | | EP | 3270616 | A1 | 17 January 2018 |
| | | | | US | 2017055194 | A1 | 23 February 2017 |
| | | | | CN | 103563443 | A | 05 February 2014 |
| | | | | IN | 2793KOLNP2013 | A | 04 April 2014 |

Form PCT/ISA/210 (patent family annex) (January 2015)